(19) Europäisches Patentamt
European Patent Office
Office européen des brevets

(11) EP 3 253 905 B1

(12) **EUROPEAN PATENT SPECIFICATION**

(45) Date of publication and mention of the grant of the patent:
**07.10.2020 Bulletin 2020/41**

(21) Application number: **16702564.2**

(22) Date of filing: **02.02.2016**

(51) Int Cl.:
*C25B 1/00* (2006.01)

(86) International application number:
**PCT/EP2016/052205**

(87) International publication number:
**WO 2016/124611 (11.08.2016 Gazette 2016/32)**

(54) **SELECTIVE PORPHYRIN-CATALYZED ELECTROCHEMICAL REDUCTION OF CO2 INTO CO IN WATER**

SELEKTIVE PORPHYRIN-KATALYSIERTE ELEKTROCHEMISCHE REDUKTION VON CO2 ZU CO IN WASSER

RÉDUCTION ÉLECTROCHIMIQUE SÉLECTIVE DE CO2 EN CO DANS L'EAU CATALYSÉE PAR LA PORPHYRINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2015 EP 15305154**

(43) Date of publication of application:
**13.12.2017 Bulletin 2017/50**

(73) Proprietors:
- **Centre National de la Recherche Scientifique (C.N.R.S.)
75016 Paris (FR)**
- **Université Paris Diderot (Paris 7)
75013 Paris (FR)**

(72) Inventors:
- **COSTENTIN, Cyrille
93100 Montreuil (FR)**
- **ROBERT, Marc
75019 Paris (FR)**
- **SAVEANT, Jean-Michel
75013 Paris (FR)**
- **TATIN, Arnaud
75013 Paris (FR)**
- **AZCARATE, Iban
75013 Paris (FR)**

(74) Representative: **Regimbeau
20, rue de Chazelles
75847 Paris Cedex 17 (FR)**

(56) References cited:
**WO-A1-2015/169763**

- **XI-ZHANG CAO ET AL: "The electrocatalytic reduction of carbon dioxide using cobalt tetrakis (4-trimethylammoniophenyl) porphyrin under high pressure", ACTA CHIMICA SINICA ENGLISH EDITION, vol. 4, no. 2, 1 January 1986 (1986-01-01) , pages 133-139, XP055124846, DOI: 10.1002/cjoc.19860040205**
- **SCIBIOH ET AL: "Electrochemical reduction of carbon dioxide: a status report", PROCEEDINGS OF THE INDIAN NATIONAL SCIENCE ACADEMY. PART A.PHYSICAL SCIENCES., vol. 70, no. 3, 1 May 2004 (2004-05-01), pages 407-462, XP055117103, IN ISSN: 0370-0046**
- **C. COSTENTIN ET AL: "A Local Proton Source Enhances CO2 Electroreduction to CO by a Molecular Fe Catalyst", SCIENCE, vol. 338, no. 6103, 5 October 2012 (2012-10-05), pages 90-94, XP055124797, ISSN: 0036-8075, DOI: 10.1126/science.1224581**
- **CYRILLE COSTENTIN ET AL: "Ultraefficient homogeneous catalyst for the CO 2 -to-CO electrochemical conversion", PROCEEDINGS OF THE NATIONAL ACADEMY OF SCIENCES, vol. 111, no. 42, 6 October 2014 (2014-10-06), pages 14990-14994, XP055199109, ISSN: 0027-8424, DOI: 10.1073/pnas.1416697111**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **CYRILLE COSTENTIN ET AL: "Efficient and selective molecular catalyst for the CO 2 -to-CO electrochemical conversion in water", PROCEEDINGS OF THE NATIONAL ACADEMY OF SCIENCES, vol. 112, no. 22, 18 May 2015 (2015-05-18) , pages 6882-6886, XP055259645, US ISSN: 0027-8424, DOI: 10.1073/pnas.1507063112**
- **CYRILLE COSTENTIN ET AL: "Current Issues in Molecular Catalysis Illustrated by Iron Porphyrins as Catalysts of the CO 2 -to-CO Electrochemical Conversion", ACCOUNTS OF CHEMICAL RESEARCH., vol. 48, no. 12, 15 December 2015 (2015-12-15), pages 2996-3006, XP055259643, US ISSN: 0001-4842, DOI: 10.1021/acs.accounts.5b00262**
- **JINLI QIAO ET AL: "A review of catalysts for the electroreduction of carbon dioxide to produce low-carbon fuels", CHEMICAL SOCIETY REVIEWS, vol. 43, no. 2, 1 November 2013 (2013-11-01), page 631, XP055114548, ISSN: 0306-0012, DOI: 10.1039/c3cs60323g**


Remarks:

The file contains technical information submitted after the application was filed and not included in this specification

**Description**

The present invention relates to the use of water soluble porphyrins complexes with iron as catalysts for the selective electrochemical reduction of $CO_2$ into CO, electrochemical cells comprising them, and methods for reducing electrochemically $CO_2$ into CO using said complexes or said electrochemical cells, thereby producing CO or syngas.

Despite the increasingly frequent use of renewable energies to produce electricity avoiding concomitant production of $CO_2$, it is reasonable to consider that $CO_2$ emissions, in particular resulting from energy production, will remain high in the next decades. It thus appears necessary to find ways to capture $CO_2$ gas, either for storing or valorization purposes.

Indeed, $CO_2$ can also be seen, not as a waste, but on the contrary as a source of carbon. For example the promising production of synthetic fuels from $CO_2$ and water has been envisaged.

However, $CO_2$ exhibits low chemical reactivity: breaking its bonds requires an energy of 724 kJ/mol. Moreover, $CO_2$ electrochemical reduction to one electron occurs at a very negative potential, thus necessitating a high energy input, and leads to the formation of a highly energetic radical anion ($CO_2^{\cdot -}$). Catalysis thus appears mandatory in order to reduce $CO_2$ and drive the process to multi-electronic and multi-proton reduction process, in order to obtain thermodynamically stable molecules. In addition, direct electrochemical reduction of $CO_2$ at inert electrodes is poorly selective, yielding formic acid in water, while it yields a mixture of oxalate, formate and carbon monoxide in low-acidity solvents such as DMF

$CO_2$ electrochemical reduction thus requires catalytic activation in order to reduce the energy cost of processing, and increase the selectivity of the species formed in the reaction process.

Several low-oxidation state transition metal complexes have been proposed to serve as homogeneous catalyst for this reaction in non-aqueous solvents such as N,N'-dimethylformamide (DMF) or acetonitrile (see Chem. Soc. Rev. 2013, 42, 2423).

Among them, electrochemically generated $Fe^0$ porphyrin complexes have been shown to be good catalysts provided they are used in the presence of Bronsted or Lewis acids (see *J. Am. Chem. Soc.* **1996**, 118, 1769; *J. Phys. Chem.* **1996**, *100,* 19981). More recent investigations have extended the range of Bronsted acids able to boost the catalysis of the $CO_2$-to-CO conversion by electrogenerated $Fe^0$-TPP without degrading the selectivity of the reaction. They have also provided a detailed analysis of the reaction mechanism (see *J. Am. Chem. Soc.* **2013**, *135,* 9023).

This is notably the case with phenol, which gave rise to the idea of installing prepositioned phenol groups in the catalyst molecules "CAT" and "FCAT" depicted below. The result was indeed a remarkably efficient and selective catalyst of the $CO_2$-to-CO conversion in particular in terms of catalytic Tafel plots (Turnover frequency vs. overpotential) with no degradation of the CO (vs. $H_2$) faradaic yield (see Science 2012, 338, 90; and Proc. Natl. Acad. Sci. U.S.A. 2014, 111, 14990-14994).

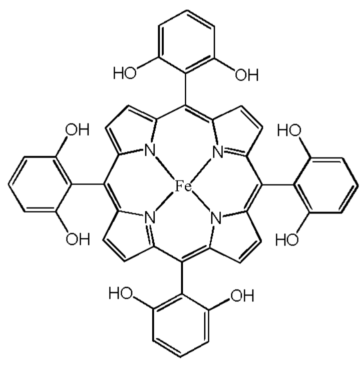

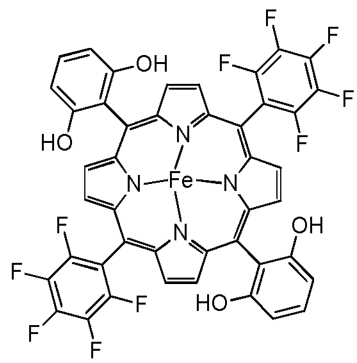

*Structure of the "CAT" catalyst (left) and "FCAT" catalyst (right)*

However, from the point of view of practical applications, the use of non-aqueous solvents is not optimal. It would be preferable indeed to be able to use water as the solvent, which would render more viable the $CO_2$-to-CO half-cell reaction as well as its association with a water-oxidation anode through a proton-exchange membrane for instance. Scibioh et al. (Proceedings of the indian national science academy, Part A. Physical Science, 2004, vol 70, p.407-462), Sonoyama et al. (Electrochemistry Communications, 1999, vol.1, p213-216) and Jinli Qiao et al. (Chemical society reviews, 2013, vol 43, p631) disclose tetraphenylporhyprins complex with iron. However, such compounds are not suitable for any catalysis in water.

$CO_2$ is poorly soluble in water ($[CO_2]$ = 0.0383 M), and is partially converted ($K_{hydration} = 1.7\times10^{-3}$) into carbonic acid, $CO_3H_2$, which has a first ionization $pK_a$ of 3.6, i.e., an apparent $pK_a$ of 6.4. Because of these features, the $CO_2$-to-CO conversion is expected to be challenged by $H_2$ evolution from reduction of carbonic acid and/ or hydrated protons.

Cobalt based catalyst cobalt tetrakis(4-trimethylammoniophenyl)porphyrin has been previously reported as an efficient catalyst for reduction of $CO_2$ into CO in water (Cao et al Acta Chimica Sinica 1986, 44, 220, pp 133-139). However, high $CO_2$ pressures are required to obtain high faradic efficiency and turn over numbers (TON) under reasonably low overpotential.

There is therefore a need for catalysts for the selective and/or tunable electrochemical reduction of $CO_2$ into CO based on iron porphyrins with high efficiency (i.e. high faradic yield, high Turnover Number (TON) and Turnover Frequency (TOF)), high selectivity and high stability, while operating at a lower overpotential (in absolute value), in water, and preferably under low $CO_2$ pressure. Moreover, it would be advantageous that the catalyst be efficient when operated homogeneously as well as when immobilized on an electrode surface.

## Summary of the Invention

Applicants surprisingly found that water soluble iron porphyrins comprising at least two anilinium substituents are particularly effective and selective catalysts for the electrochemical reduction of $CO_2$ into CO in water.

The catalysts of the present invention exhibit high and tunable selectivity when the electrochemical reduction is carried out in water. Both homogeneous and heterogeneous catalytic systems are efficient, in particular at low overpotential and $CO_2$ pressure.

Therefore, in a first aspect, the present invention is directed to the use of a complex of a porphyrin of formula (I) below:

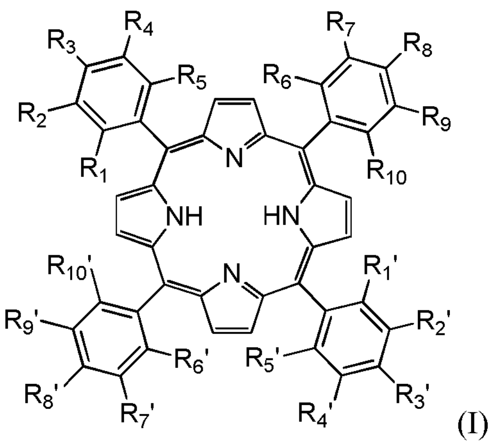
(I)

wherein $R_1$ to $R_{10}$ and $R_1$' to $R_{10}$' are independently selected from the group consisting of H, F and $N^+(C_1\text{-}C_4\ alkyl)_3$, and wherein:

at least 2 and at most 6 groups among $R_1$ to $R_{10}$ and $R_1$' to $R_{10}$' being independently $N^+(C_1\text{-}C_4\ alkyl)_3$, and,
at least one of $R_6$, $R_{10}$, $R_6$' and $R_{10}$' is selected from the group consisting of H and F, and
if at least one of $R_1$ to $R_5$ represents $N^+(C_1\text{-}C_4\ alkyl)_3$, then at least one of the other $R_1$ to $R_5$ is H, and
if at least one of $R_{1'}$ to $R_{5'}$ represents $N^+(C_1\text{-}C_4\ alkyl)_3$, then at least one of the other $R_{1'}$ to $R_{5'}$ is H, and
if at least one of $R_6$ to $R_{10}$ represents $N^+(C_1\text{-}C_4\ alkyl)_3$, then at least one of the other $R_6$ to $R_{10}$ is H, and
if at least one of $R_{6'}$ to $R_{10'}$ represents $N^+(C_1\text{-}C_4\ alkyl)_3$, then at least one of the other $R_{6'}$ to $R_{10'}$ is H,
with iron in the oxidation state 0 to +III,
and salts thereof,
as catalyst for the electrochemical reduction of $CO_2$ into CO in water,
wherein $CO_2$ is reduced into CO by the porphyrin of formula (I) with iron in the state Fe(0).

One example of the present description relates to the use of a complex of a porphyrin of formula (I) below:

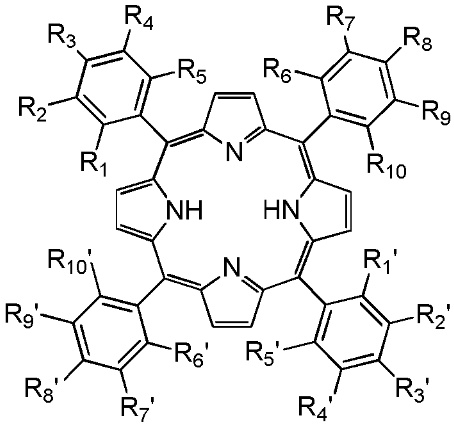

(I)

wherein $R_1$ to $R_{10}$ and $R_1$' to $R_{10}$' are independently selected from the group consisting of H, OH, F, $C_1$-$C_6$ alcohol, and $N^+(C_1\text{-}C_4\ alkyl)_3$,
and wherein:

at least 2 and at most 8, preferably at most 6 groups among $R_1$ to $R_{10}$ and $R_{1'}$ to $R_{10}$' being independently $N^+(C_1\text{-}C_4\ alkyl)_3$, and,
at least one of $R_1$, $R_5$, $R_1$' and $R_5$' is selected from the group consisting of H, F, $C_1$-$C_6$ alcohol, and $N^+(C_1\text{-}C_4\ alkyl)_3$,
and at least one of $R_6$, $R_{10}$, $R_6$' and $R_{10}$' is selected from the group consisting of H, F, $C_1$-$C_6$ alcohol, and
if at least one of $R_1$ to $R_5$ represents $N^+(C_1\text{-}C_4\ alkyl)_3$, then at least one of the other $R_1$ to $R_5$ is selected from the group consisting of H, OH or $C_1$-$C_6$ alcohol, and
if at least one of $R_{1'}$ to $R_{5'}$ represents $N^+(C_1\text{-}C_4\ alkyl)_3$, then at least one of the other $R_{1'}$ to $R_{5'}$ is selected from the group consisting of H, OH or $C_1$-$C_6$ alcohol, and
if at least one of $R_6$ to $R_{10}$ represents $N^+(C_1\text{-}C_4\ alkyl)_3$, then at least one of the other $R_6$ to $R_{10}$ is selected from the group consisting of H, OH or $C_1$-$C_6$ alcohol, and
if at least one of $R_{6'}$ to $R_{10}$' represents $N^+(C_1\text{-}C_4\ alkyl)_3$, then at least one of the other $R_{6'}$ to $R_{10}$' is selected from the group consisting of H, OH or $C_1$-$C_6$ alcohol,
with iron, preferably a Fe(III) to Fe(0) complex,
and salts thereof,
as catalyst for the electrochemical reduction of $CO_2$ into CO in water.

In a second aspect, the present invention relates to a method of reducing electrochemically $CO_2$ into CO using as catalyst a complex of a porphyrin of formula (I) as defined above or below with iron, preferably a Fe(III) to Fe(0) complex, and salts thereof, in an electrochemical cell comprising at least two compartments, a cathode, an anode, an electrolyte solution comprising water as the solvent, the substrate $CO_2$, and a power supply providing the energy necessary to trigger the electrochemical reactions involving the substrate ($CO_2$).

In another aspect, the present invention relates to the use of a complex of a porphyrin of formula (I) as defined above or below with iron, preferably a Fe(III) to Fe(0) complex, and salts thereof, as catalyst for reducing electrochemically $CO_2$ into CO in water, wherein said complex is comprised in a two-compartment electrochemical cell comprising at least:

- an electrolyte solution comprising water as the solvent, a supporting electrolyte such as a salt, preferably alkali metal salts, and more preferably carbonate and chloride alkali metal salts or mixtures thereof, and the substrate $CO_2$,
- a power supply providing the energy necessary to trigger the electrochemical reactions involving the substrate, and
- two electrodes (an anode and a cathode).

In another aspect, the present description relates to a method of reducing electrochemically $CO_2$ into CO using the electrochemical cell of the invention.

## Brief Description of the Drawings

Figure 1 represents the cyclic voltammetry curves of 0.5 mM WSCAT at 0.1 V/s, Temp. 21°C. **a**: in water + 0. 1 M

KCl brought to *pH* = 6.7 by addition of KOH under 1 atm. $CO_2$. **b**: same as **a** but in the absence of $CO_2$. **c**: same at **b** but in DMF + 0.1 *n*-$Bu_4NPF_6$. **d**: same at **c** but under 1 atm. $CO_2$, and presence of 3 M phenol. The abscissa axis represents E (V vs NHE, in volts), and the ordinate axis represents the current i (in μA). The peak current of the reversible $Fe^{II}/Fe^{I}$ wave is a measure of a one-electron transfer.

Figure 2 represents the electrolysis of a 0.5 mM WSCAT solution in water + 0. 1 M KCl brought to *pH* = 6.7 by addition of KOH under 1 atm. $CO_2$ at -0.86 V vs. NHE. Temp. 21 °C. The reaction products were analyzed at the end of each day. The abscissa axis represents the duration of electrolysis (in hours), and the ordinate axis represents the charge passed through the system (in Coulomb Cb).

Figure 3 depicts the benchmarking of all catalysts based on catalytic Tafel plots derived from cyclic voltammetry experiments in DMF or acetonitrile (see Costentin et al Proc. Natl. Acad. Sci. U.S.A. 2014, 111, 14990-14994 for details and references). The abscissa axis represents the overpotential η (in Volts), and the ordinate axis represents log(TOF). See example 4 for experimental details.

py = pyridine, tpy = 2,2':6',2"-terpyridine, bpy =2,2'-bipyridine, Mebimpy = 2,6-bis(1-methyl benzimidazol-2-yl)pyridine m-$(triphos)_2$ :

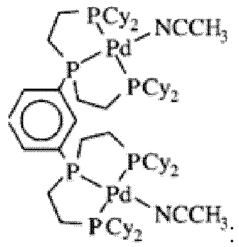

N2:

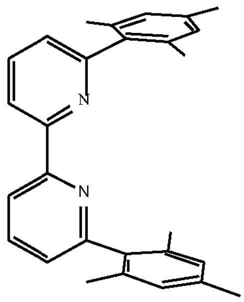

Figure 4 exhibits the electrolysis of an electrode consisting of a glassy carbon plate on which 0.50 μmol WSCAT is immobilized. The electrolyte is an aqueous solution of 0.1 M $NaClO_4$ brought *to pH* = 6.7 by addition of 0.1 M $NaHCO_3$ under 1 atmosphere of $CO_2$. The abscissa axis represents the duration of electrolysis (in minutes), and the ordinate axis shows the intensity (in miliamperes, left) and charge passed through the system (in Coulombs, right). Applied potential was -0.96 V *vs.* NHE

Figure 5 displays the electrolysis of an electrode consisting of Toray® carbon paper on which 1.8 μmol WSCAT is immobilized. The electrolyte is an aqueous solution of 0.1 M KCl brought to *pH* = 7.3 by addition of 0.5 M $KHCO_3$ under 1 atmosphere of $CO_2$. The abscissa axis represents the duration of electrolysis (in hours), and the ordinate axis shows the intensity (in milliamperes, left) and charge passed through the system (in Coulombs, right, plain line is the total charge and dash line is the partial charge for CO production). Applied potential was -0.96 V vs. NHE

## Detailed description of the invention

As used herein, the words "include," "comprise, "contain", and their variants, are intended to be non-limiting, such that recitation of items in a list is not to the exclusion of other like items that may also be useful in the compositions, devices and methods of this invention.

According to the present invention, an alkyl is understood to mean a linear or branched, saturated hydrocarbon chain. Examples of $C_1$-$C_4$ alkyl are methyl, ethyl, *n*-propyl, *i*-propyl, *n*-butyl, *s*-butyl, *t*-butyl.

According to the present invention, a $C_1$-$C_6$ alcohol is understood to mean a $C_1$-$C_6$ alkyl substituted by at least one hydroxyl group. The $C_1$-$C_6$ alcohol may be linear or branched, and is saturated. Preferably, the $C_1$-$C_6$ alcohol is a $C_1$-$C_4$ alcohol. Examples of $C_1$-$C_4$ alcohol are hydroxymethyl, 1-hydroxyethyl, 2-hydroxyethyl, 1-hydroxypropyl, 2-hydroxypropyl, 3-hydroxypropyl, 1-hydroxy-1-methylethyl, 2-hydroxy-1-methyl ethyl, 1-hydroxybutyl, 2-hydroxybutyl, 3-hydroxybutyl, 4-hydroxybutyl, 1-hydroxy-2-methylpropyl, 2-hydroxy-2-methylpropyl, 3-hydroxy-2-methylpropyl, 1-hydroxy-1-methylpropyl, 2-hydroxy-1-methylpropyl, 3 -hydroxy-1-methylpropyl, (hydroxymethyl)-1-propyl, 1,2-dihydroxyethyl.

As used herein, "overpotential (η)" is understood as a potential difference between the thermodynamic reduction potential of the $CO_2$/CO couple ($E°_{CO2/CO}$) and the potential at which the reduction is experimentally observed (E), according to the following equation: $\eta = E°_{CO2/CO} - E$.

As used herein, the "TurnOver Number (TON)" represents the number of moles of substrate that a mole of active catalyst can convert.

As used herein, the "TurnOver Frequency (TOF)" refers to the turnover per unit of time: $TOF = \frac{TON}{t}$, with t representing the time of catalysis.

As used herein, the acronym NHE is understood as "Normal Hydrogen Electrode".

As used herein, the acronym SCE is understood as "Saturated Calomel Electrode".

Electrolysis is for instance performed in an electrochemical cell, which typically comprises at least:

- an electrolyte solution comprising the solvent, a supporting electrolyte as a salt, and the substrate;
- a power supply providing the energy necessary to trigger the electrochemical reactions involving the substrate; and
- two electrodes, i.e. electrical conductors providing a physical interface between the electrical circuit and the solution.

As used herein, the "faradic yield of an electrochemical cell" aimed at producing CO (or $H_2$) gas through electrochemical reduction of $CO_2$ gas is the ratio of the amount of electrons (in Coulomb) used to produce CO (or $H_2$) gas relative to the amount of electrons (in Coulomb) furnished to the electrochemical system by the external electric source. The faradic yield is expressed in %.

According to the present invention, a "homogeneous catalyst" is a catalyst which is contained in the same phase as the reactants. In contrast, a heterogeneous catalyst is contained in a phase which differs from the phase of the reactants. Therefore, in the present invention, a "homogeneous catalyst" is soluble in the electrochemical cell solution. In particular, the homogeneous catalysts of the invention are soluble in water.

As used herein, "conductive polymers" are understood as organic polymers that conduct electricity. In particular, polyacetylene, polypyrrole, polyaniline, poly(p-phenylene vinylene) (PPV), poly(3-alkylthiophenes) and their copolymers are the main classes of conductive polymers. Examples of conductive polymers are polyfluorenes, polyphenylenes, polypyrenes, polyazulenes, polynaphthalenes, poly(pyrrole)s (PPY), polycarbazoles, polyindoles, polyazepines, polyanilines (PANI), poly(thiophene)s (PT), poly(3,4-ethylenedioxythiophene) (PEDOT), and poly(p-phenylene sulfide) (PPS).

Preferred conductive polymers are polypyrrole, polyazepines, polyanilines or poly(3,4-ethylenedioxythiophene). It may also be a polymer in which a conductive material, such as carbon powder is embedded.

As used herein, an "ionomer" is understood as a polymer that comprises monomer units of both electrically neutral monomer units and a fraction of ionized monomer units (usually no more than 15 mole percent) covalently bound to the polymer backbone as lateral moieties. Most ionomers are copolymers of neutral segments and ionized units, said ionized units usually consisting of carboxylic acid groups or sulfonic acid groups.

Preferred examples of ionomers are polystyrene sulfonates, and in particular Nafion®, a sulfonated tetrafluoroethylene based fluoropolymer-copolymer.

As used herein, a "fluoropolymer" is understood as a fluorocarbon based polymer with multiple carbon-fluorine bonds. In particular, a fluoropolymer results from a polymerization reaction using at least one type of fluorinated monomer. It is characterized by a high resistance to solvents, acids, and bases. Examples of suitable fluoropolymers are polyvinylfluoride and polyethylenetetrafluoroethylene.

As used herein, a "conductive material" is understood as a material that conducts electricity. Preferred examples of conductive materials are conductive carbon materials, and in particular carbon powder and carbon nanotubes.

As used herein, "syngas" is understood as a mixture of $H_2$ and CO gas, in any proportion. However, syngas does not encompass pure $H_2$ or pure CO gas.

One example of the present description relates to a use of a complex of a porphyrin of formula below:

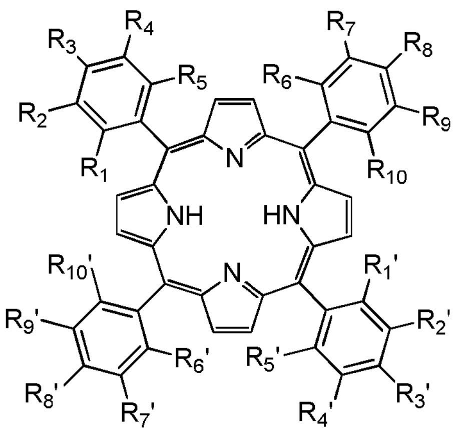

wherein $R_1$ to $R_{10}$ and $R_1$' to $R_{10}$' are independently selected from the group consisting of H, OH, F, $C_1$-$C_6$ alcohol, and $N^+(C_1$-$C_4$ alkyl$)_3$,
and wherein:

at least 2 and at most 8 groups among $R_1$ to $R_{10}$ and $R_1$' to $R_{10}$' being independently $N^+(C_1$-$C_4$ alkyl$)_3$, and,
at least one of $R_1$, $R_5$, $R_1$' and $R_5$' is selected from the group consisting of H, F, $C_1$-$C_6$ alcohol, and $N^+(C_1$-$C_4$ alkyl$)_3$,
and at least one of $R_6$, $R_{10}$, $R_6$' and $R_{10}$' is selected from the group consisting of H, F, $C_1$-$C_6$ alcohol, and
if at least one of $R_1$ to $R_5$ represents $N^+(C_1$-$C_4$ alkyl$)_3$, then at least one of the other $R_1$ to $R_5$ is selected from the group consisting of H, OH or $C_1$-$C_6$ alcohol, and
if at least one of $R_{1'}$ to $R_{5'}$ represents $N^+(C_1$-$C_4$ alkyl$)_3$, then at least one of the other $R_{1'}$ to $R_{5'}$ is selected from the group consisting of H, OH or $C_1$-$C_6$ alcohol, and
if at least one of $R_6$ to $R_{10}$ represents $N^+(C_1$-$C_4$ alkyl$)_3$, then at least one of the other $R_6$ to $R_{10}$ is selected from the group consisting of H, OH or $C_1$-$C_6$ alcohol, and
if at least one of $R_{6'}$ to $R_{10}$' represents $N^+(C_1$-$C_4$ alkyl$)_3$, then at least one of the other $R_{6'}$ to $R_{10}$' is selected from the group consisting of H, OH or $C_1$-$C_6$ alcohol,
with iron, preferably a Fe(III) to Fe(0) complex,
and salts thereof,
as catalyst for the electrochemical reduction of $CO_2$ into CO in water.

In a particular example, the porphyrin of formula described above may comprises at least 2 and at most 6 groups among $R_1$ to $R_{10}$ and $R_1$' to $R_{10}$' which are independently $N^+(C_1$-$C_4$ alkyl$)_3$.

In the porphyrin of formula as defined above, a single phenyl ring may comprise at most two $N^+(C_1$-$C_4$ alkyl$)_3$ groups and at most four groups selected from F and $N^+(C_1$-$C_4$ alkyl$)_3$. In other words, a single phenyl ring may at most comprise two $N^+(C_1$-$C_4$ alkyl$)_3$ groups and two F groups, or one $N^+(C_1$-$C_4$ alkyl$)_3$ groups and three F groups.

More precisely, $R_1$ to $R_5$ are independently selected from the group consisting of H, OH, F, $C_1$-$C_6$ alkoxy, and $N^+(C_1$-$C_4$ alkyl$)_3$, and preferably at most two groups among $R_1$ to $R_5$ represent $N^+(C_1$-$C_4$ alkyl$)_3$ and at most four groups among $R_1$ to $R_5$ represent $N^+(C_1$-$C_4$ alkyl$)_3$ or F. For example, the same applies to $R_{1'}$ to $R_{5'}$, but also to $R_6$-$R_{10}$ and $R_{6'}$-$R_{10'}$.

For example, in formula as defined above, $R_3$ and $R_3$' independently may represent $N^+(C_1$-$C_4$ alkyl$)_3$.

In formula as defined above, $R_8$ and $R_8$' independently may represent $N^+(C_1$-$C_4$ alkyl$)_3$.

As an example, in formula described above, $R_1$, $R_2$, $R_4$, $R_5$, $R_6$, $R_7$, $R_9$, $R_{10}$, $R_1$', $R_2$', $R_4$', $R_5$', $R_6$', $R_7$', $R_9$', $R_{10}$' are independently selected from the group consisting of H, OH and $C_1$-$C_6$ alcohol, at least one of $R_1$, $R_5$, $R_1$' and $R_5$' is selected from the group consisting of H and $C_1$-$C_6$ alcohol, and at least one of $R_6$, $R_{10}$, $R_6$' and $R_{10}$' is selected from the group consisting of H and $C_1$-$C_6$ alcohol.

In a particular example, the phenyl groups of the porphyrins described above are devoid of ortho-ortho' hydroxyl groups. In other words, in thisparticular example, $R_1$, $R_5$, $R_{1'}$, $R_{5'}$, $R_6$, $R_{10}$, $R_{6'}$, $R_{10'}$ are independently selected from the group consisting of H, F, $C_1$-$C_6$ alcohol, and $N^+(C_1$-$C_4$ alkyl$)_3$.

In a particular example, $R_1$, $R_2$, $R_3$, $R_4$, $R_5$, are respectively identical to $R_1$', $R_2$', $R_{3'}$, $R_4$', $R_5$'. In another particular embodiment, $R_6$, $R_7$, $R_8$, $R_9$, $R_{10}$ are respectively identical to $R_6$', $R_7$', $R_{8'}$, $R_9$', $R_{10}$'.

In another particular example, in porphyrins described above, $R_1$ to $R_{10}$ and $R_1$' to $R_{10}$' may independently be selected from the group consisting of H, F, $C_1$-$C_6$ alcohol, and $N^+(C_1$-$C_4$ alkyl$)_3$,
and:

at least 2 and at most 8 (preferably at most 6) groups among $R_1$ to $R_{10}$ and $R_1$' to $R_{10}$' being independently $N^+(C_1$-$C_4$

alkyl)$_3$, and,

at least one of $R_1$, $R_5$, $R_1$' and $R_5$' may be selected from the group consisting of H, F, $C_1$-$C_6$ alcohol, and $N^+(C_1$-$C_4$ alkyl)$_3$, and at least one of $R_6$, $R_{10}$, $R_6$' and $R_{10}$' may be selected from the group consisting of H, F, $C_1$-$C_6$ alcohol, and

if at least one of $R_1$ to $R_5$ represents $N^+(C_1$-$C_4$ alkyl)$_3$, then at least one of the other $R_1$ to $R_5$ may be selected from the group consisting of H or $C_1$-$C_6$ alcohol, and

if at least one of $R_{1'}$ to $R_{5'}$ represents $N^+(C_1$-$C_4$ alkyl)$_3$, then at least one of the other $R_{1'}$ to $R_{5'}$ may be selected from the group consisting of H or $C_1$-$C_6$ alcohol, and

if at least one of $R_6$ to $R_{10}$ represents $N^+(C_1$-$C_4$ alkyl)$_3$, then at least one of the other $R_6$ to $R_{10}$ may be selected from the group consisting of H or $C_1$-$C_6$ alcohol, and

if at least one of $R_{6'}$ to $R_{10}$' represents $N^+(C_1$-$C_4$ alkyl)$_3$, then at least one of the other $R_{6'}$ to $R_{10}$' may be selected from the group consisting of H or $C_1$-$C_6$ alcohol,

with iron, preferably a Fe(III) to Fe(0) complex,

and salts thereof,

as catalyst for the electrochemical reduction of $CO_2$ into CO in water.

For example, in the porphyrin of formula as defined above, a single phenyl ring may comprise at most two $N^+(C_1$-$C_4$ alkyl)$_3$ groups and at most four groups selected from F and $N^+(C_1$-$C_4$ alkyl)$_3$. In other words, a single phenyl ring may at most comprise two $N^+(C_1$-$C_4$ alkyl)$_3$ groups and two F groups, or one $N^+(C_1$-$C_4$ alkyl)$_3$ groups and three F groups. More precisely, $R_1$ to $R_5$ are independently selected from the group consisting of H, F, $C_1$-$C_6$ alkoxy, and $N^+(C_1$-$C_4$ alkyl)$_3$, and preferably at most two groups among $R_1$ to $R_5$ represent $N^+(C_1$-$C_4$ alkyl)$_3$ and at most four groups among $R_1$ to $R_5$ represent $N^+(C_1$-$C_4$ alkyl)$_3$ or F. For example, the same applies to $R_{1'}$ to $R_{5'}$, but also to $R_6$-$R_{10}$ and $R_{6'}$-$R_{10'}$.

In formula as defined in the present particular embodiment, $R_3$ and $R_3$' independently may represent $N^+(C_1$-$C_4$ alkyl)$_3$.

For example, in formula as defined in the present particular embodiment, $R_8$ and $R_8$' independently may represent $N^+(C_1$-$C_4$ alkyl)$_3$.

For example, in formula as defined in the present particular embodiment, $R_1$, $R_2$, $R_4$, $R_5$, $R_6$, $R_7$, $R_9$, $R_{10}$, $R_1$', $R_2$', $R_4$', $R_5$', $R_6$', $R_7$', $R_9$', $R_{10}$' may independently be selected from the group consisting of H and $C_1$-$C_6$ alcohol, at least one of $R_1$, $R_5$, $R_1$' and $R_5$' may be selected from the group consisting of H and $C_1$-$C_6$ alcohol, and at least one of $R_6$, $R_{10}$, $R_6$' and $R_{10}$' may be selected from the group consisting of H and $C_1$-$C_6$ alcohol. In a further particular example, $R_1$, $R_2$, $R_3$, $R_4$, $R_5$, may be respectively identical to $R_1$', $R_2$', $R_{3'}$, $R_4$', $R_5$'. In another particular example, $R_6$, $R_7$, $R_8$, $R_9$, $R_{10}$ may be respectively identical to $R_6$', $R_7$', $R_{8'}$, $R_9$', $R_{10}$'.

First, the present invention relates to the use of a complex of a porphyrin of formula (I) below:

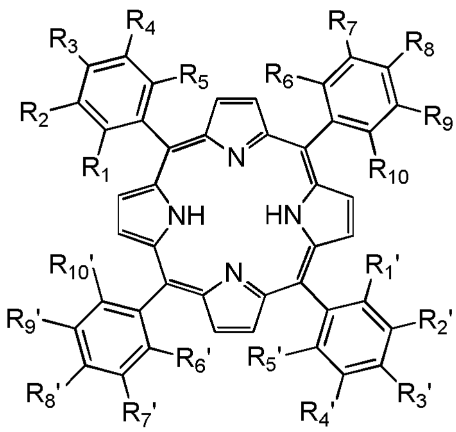

(I)

wherein $R_1$ to $R_{10}$ and $R_1$' to $R_{10}$' are independently selected from the group consisting of H, F and $N^+(C_1$-$C_4$ alkyl)$_3$, and wherein:

at least 2 and at most 6 groups among $R_1$ to $R_{10}$ and $R_1$' to $R_{10}$' being independently $N^+(C_1$-$C_4$ alkyl)$_3$, and,

at least one of $R_6$, $R_{10}$, $R_6$' and $R_{10}$' is selected from the group consisting of H and F, and

if at least one of $R_1$ to $R_5$ represents $N^+(C_1$-$C_4$ alkyl)$_3$, then at least one of the other $R_1$ to $R_5$ is H, and

if at least one of $R_{1'}$ to $R_{5'}$ represents $N^+(C_1$-$C_4$ alkyl)$_3$, then at least one of the other $R_{1'}$ to $R_{5'}$ is H, and

if at least one of $R_6$ to $R_{10}$ represents $N^+(C_1$-$C_4$ alkyl)$_3$, then at least one of the other $R_6$ to $R_{10}$ is H, and

if at least one of $R_{6'}$ to $R_{10}$' represents $N^+(C_1$-$C_4$ alkyl)$_3$, then at least one of the other $R_{6'}$ to $R_{10}$' is H,

with iron in the oxidation state 0 to +III,
and salts thereof,
as catalyst for the electrochemical reduction of $CO_2$ into CO in water,
wherein $CO_2$ is reduced into CO by the porphyrin of formula (I) with iron in the state Fe(0).

Preferably, in the porphyrin of formula (I) as defined above, a single phenyl ring comprises at most two $N^+(C_1-C_4$ alkyl$)_3$ groups and at most four groups selected from F and $N^+(C_1-C_4$ alkyl$)_3$. In other words, a single phenyl ring may at most comprise two $N^+(C_1-C_4$ alkyl$)_3$ groups and two F groups, or one $N^+(C_1-C_4$ alkyl$)_3$ groups and three F groups. More precisely, $R_1$ to $R_5$ are independently selected from the group consisting of H, F, and $N^+(C_1-C_4$ alkyl$)_3$, and preferably at most two groups among $R_1$ to $R_5$ represent $N^+(C_1-C_4$ alkyl$)_3$ and at most four groups among $R_1$ to $R_5$ represent $N^+(C_1-C_4$ alkyl$)_3$ or F. Advantageously, the same applies to $R_{1'}$ to $R_{5'}$, but also to $R_6$-$R_{10}$ and $R_{6'}$-$R_{10'}$.
Advantageously, in formula (I) as defined above, $R_3$ and $R_3$' independently represent $N^+(C_1-C_4$ alkyl$)_3$.
Preferably, in formula (I) as defined above, $R_8$ and $R_8$' independently represent $N^+(C_1-C_4$ alkyl$)_3$.
Advantageously, in formula (I), $R_1$, $R_2$, $R_4$, $R_5$, $R_6$, $R_7$, $R_9$, $R_{10}$, $R_1$', $R_2$', $R_4$', $R_5$', $R_6$', $R_7$', $R_9$', $R_{10}$' are H. In a particular embodiment, $R_1$, $R_2$, $R_3$, $R_4$, $R_5$, are respectively identical to $R_1$', $R_2$', $R_{3'}$, $R_4$', Rs'. In another particular embodiment, $R_6$, $R_7$, $R_8$, $R_9$, $R_{10}$ are respectively identical to $R_6$', $R_7$', $R_{8'}$, $R_9$', $R_{10}$'.
In a preferred embodiment, the porphyrin of formula (I) is symmetric, that is $R_1$, $R_2$, $R_3$, $R_4$, $R_5$, are respectively identical to $R_1$', $R_2$', $R_3$', $R_4$', $R_5$', and $R_6$, $R_7$, $R_8$, $R_9$, $R_{10}$ are respectively identical to $R_6$', $R_7$', $R_8$', $R_9$', $R_{10}$'. In this preferred embodiment, the porphyrin of formula (I) is of formula (I') below:

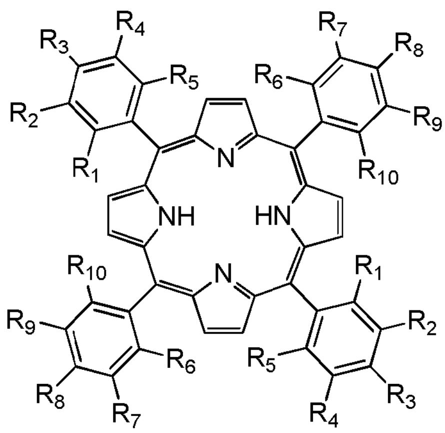
(I'),

wherein $R_1$ to $R_{10}$ are independently selected from the group consisting of H, F, and $N^+(C_1-C_4$ alkyl$)_3$,
and wherein:

at least 1 and at most 4, preferably at most 3 groups among $R_1$ to $R_{10}$ being independently $N^+(C_1-C_4$ alkyl$)_3$, and,
at least one of $R_1$ and $R_5$ is selected from the group consisting of H, F, and $N^+(C_1-C_4$ alkyl$)_3$, and at least one of $R_6$ and $R_{10}$ is selected from the group consisting of H and F, and
if at least one of $R_1$ to $R_5$ represents $N^+(C_1-C_4$ alkyl$)_3$, then at least one of the other $R_1$ to $R_5$ is H, , and
if at least one of $R_6$ to $R_{10}$ represents $N^+(C_1-C_4$ alkyl$)_3$, then at least one of the other $R_6$ to $R_{10}$ is H,.

In the porphyrin of formula (I'), advantageously one of $R_1$ to $R_5$ represents $N^+(C_1-C_4$ alkyl$)_3$, and at most two of $R_6$ to $R_{10}$ represent independently $N^+(C_1-C_4$ alkyl$)_3$. Preferably, $R_3$ and $R_5$ represent independently $N^+(C_1-C_4$ alkyl$)_3$, and $R_1$, $R_2$, $R_3$, $R_4$, $R_5$, $R_6$, $R_7$, $R_8$, $R_9$, $R_{10}$, are independently selected from the group consisting of H, and F and
at least one of $R_1$ and $R_5$ is selected from the group consisting of H, F, and $N^+(C_1-C_4$ alkyl$)_3$, and at least one of $R_6$ and $R_{10}$ is selected from the group consisting of H and F, and
at least one of $R_1$ to $R_5$ being H, and
at least one of $R_6$ to $R_{10}$ being H.
In a particular embodiment, in formula (I'), $R_1$ to $R_{10}$ are independently selected from the group consisting of H, F, and $N^+(C_1-C_4$ alkyl$)_3$,
And:

at least 1 and at most 3 groups among $R_1$ to $R_{10}$ being independently $N^+(C_1-C_4$ alkyl$)_3$, and,
at least one of $R_1$ and $R_5$ is selected from the group consisting of H, F, and $N^+(C_1-C_4$ alkyl$)_3$, and at least one of $R_6$

and $R_{10}$ is selected from the group consisting of H and F, and
if at least one of $R_1$ to $R_5$ represents $N^+(C_1\text{-}C_4\ alkyl)_3$, then at least one of the other $R_1$ to $R_5$ is H and
if at least one of $R_6$ to $R_{10}$ represents $N^+(C_1\text{-}C_4\ alkyl)_3$, then at least one of the other $R_6$ to $R_{10}$ is H.

In this particular embodiment of the porphyrin of formula (I'), advantageously one of $R_1$ to $R_5$ represents $N^+(C_1\text{-}C_4\ alkyl)_3$, and at most two of $R_6$ to $R_{10}$ represent independently $N^+(C_1\text{-}C_4\ alkyl)_3$. Preferably, $R_3$ and $R_8$ represent independently $N^+(C_1\text{-}C_4\ alkyl)_3$, and $R_1$, $R_2$, $R_3$, $R_4$, $R_5$, $R_6$, $R_7$, $R_8$, $R_9$, $R_{10}$, are independently selected from the group consisting of H and F,
at least one of $R_1$ to $R_5$ being H, and
at least one of $R_6$ to $R_{10}$ being H.

Examples of porphyrin of the present description are :

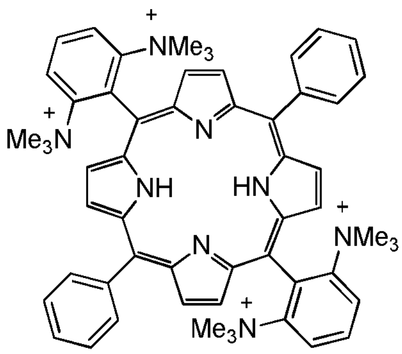
,

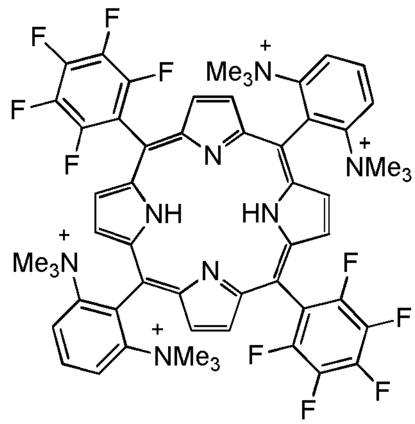
,

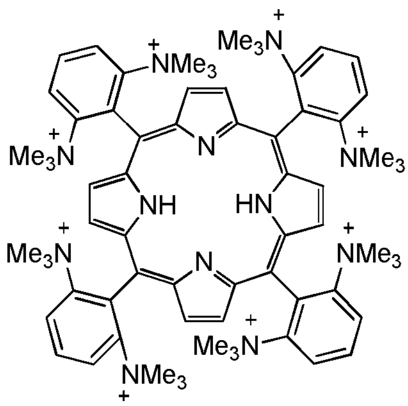
,

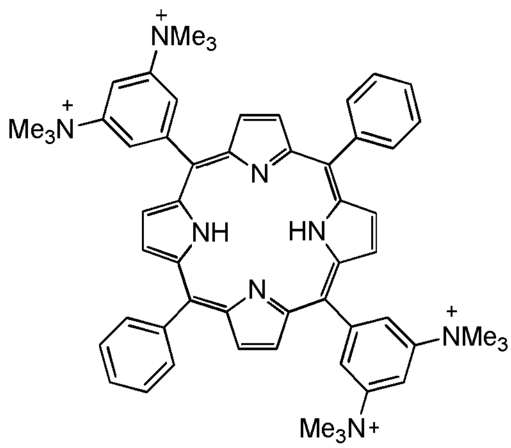
,

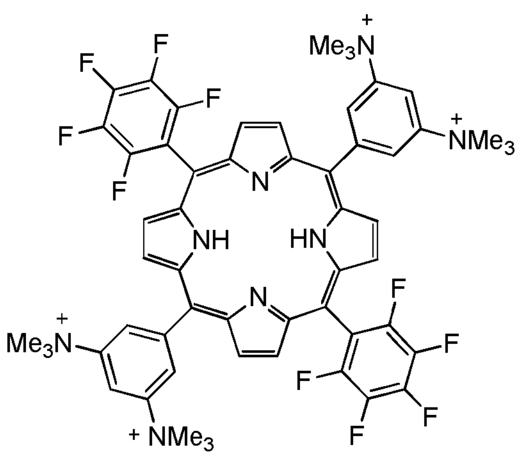
,

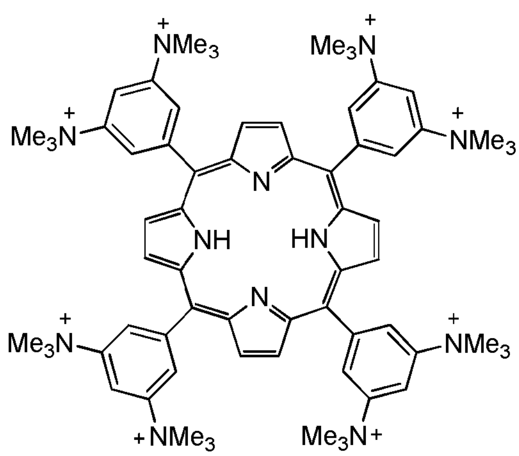
,

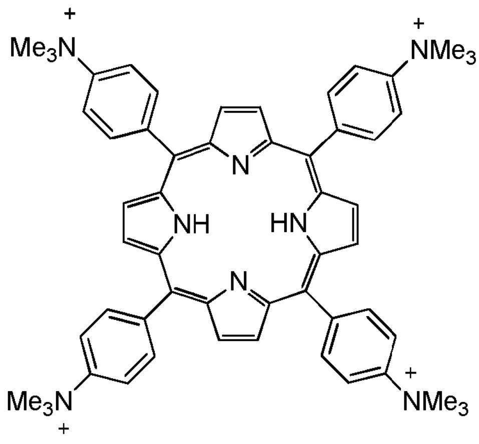, or 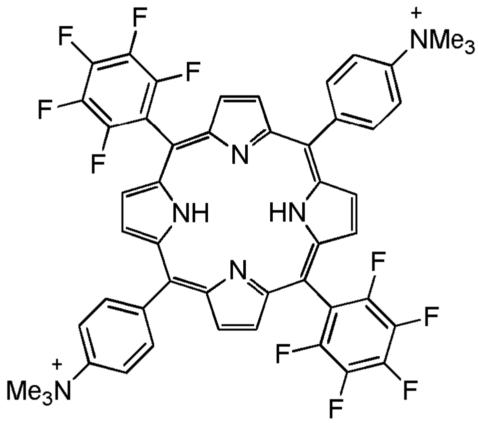,

In a particularly advantageous embodiment of the present invention , the porphyrin of formula (I) is:

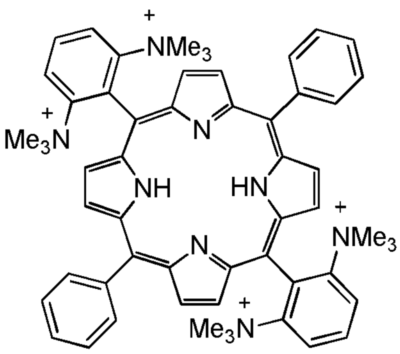, 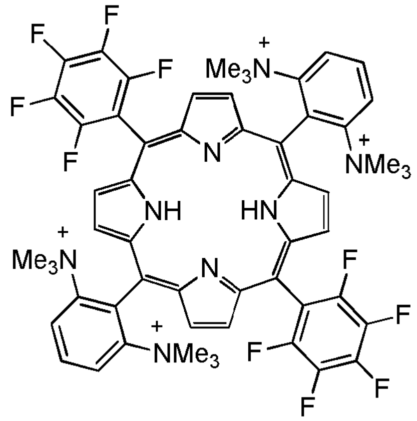, ,

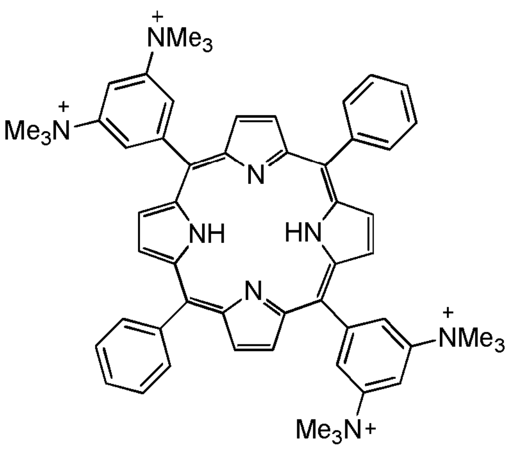, 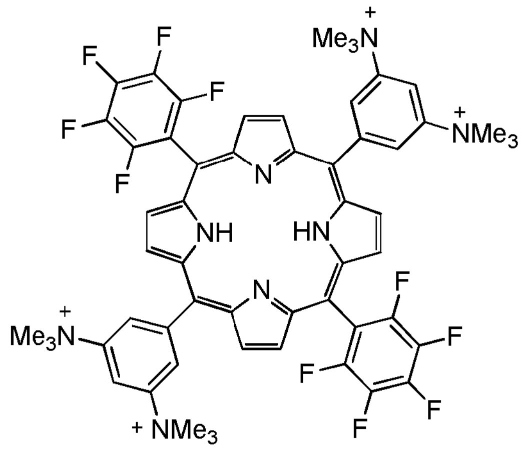, ,

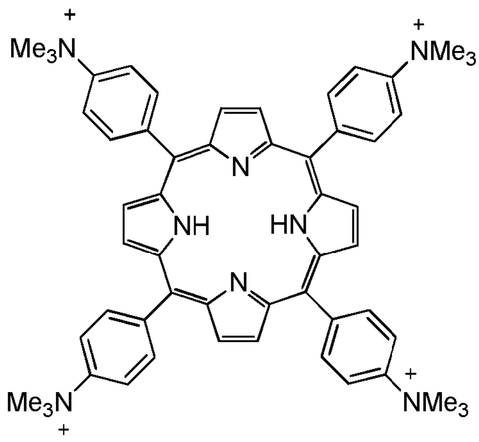, or 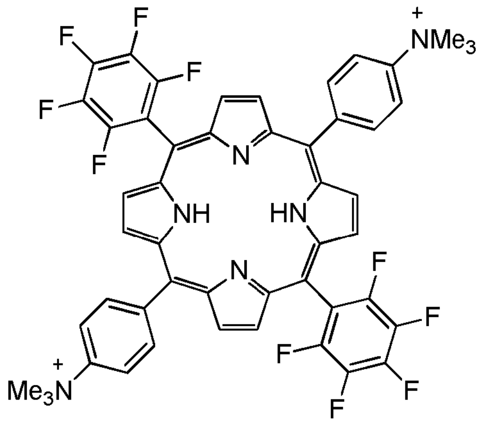,

more preferably it is

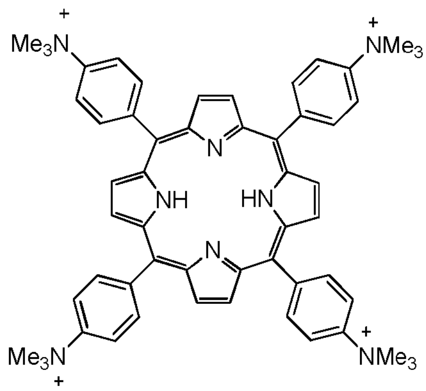

or

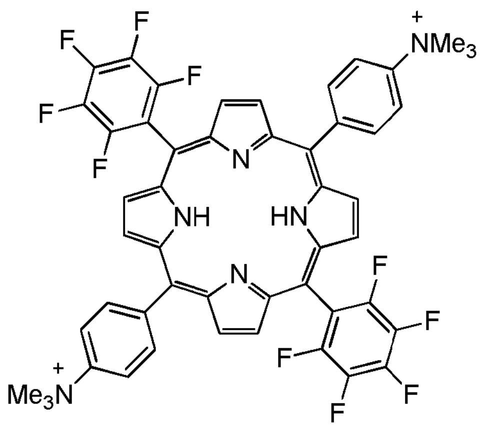,

even more preferably it is

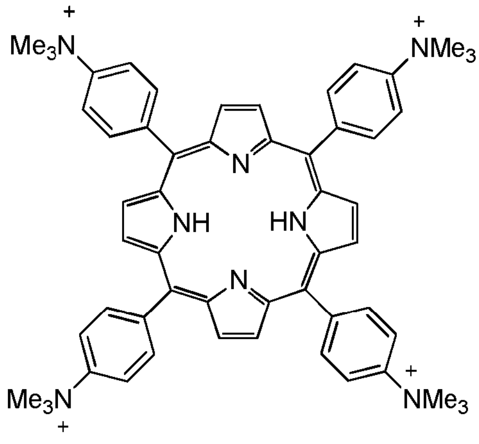

,

and said porphyrin is advantageously complexed with iron so as to yield the Fe(III) to Fe(0) complex, preferably as their chloride salt (octachloride, hexachloride, tetrachloride or dichloride depending on the number of anilinium groups in the porphyrin). Of note, the iron complex of

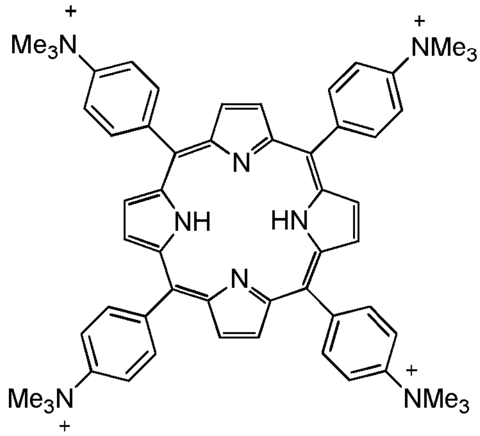

(especially as its tetrachloride salt) is referred to as WSCAT throughout the present description.

The metal transition complexes of the porphyrins of formula (I) are prepared according to well-known methods in the art (see Costentin et al Proc. Natl. Acad. Sci. U.S.A. 2014, 111, 14990-14994). Of note, the complex is typically isolated as the Fe(III) complex, and more particularly as the Fe(III)Cl complex of the corresponding porphyrin of formula (I), where appropriate as a salt such as the chloride salt (octachloride, hexachloride, tetrachloride or dichloride depending on the number of anilinium groups in the porphyrin). The active Fe(0) species (active Fe(0) complex for the reduction of $CO_2$ into CO) is generated *in situ* in the reaction medium (in particular in the electrochemical cell) from the Fe(III) complex. Therefore, in the present invention, $CO_2$ is reduced into CO by the porphyrin of formula (I) with Fe(0) (iron at the oxidation state of 0).

Therefore, in the use of the invention, the electrochemical reduction of $CO_2$ into CO typically involves the Fe(0), Fe(I), Fe(II) and Fe(III) complexes of the porphyrins of formula (I) as defined above.

In a particularly preferred embodiment, the complex of a porphyrin is used for catalyzing the electrochemical reduction of $CO_2$ into CO in water.

Despite that, depending on the experimental conditions, $H_2$ production can be promoted, and syngas may be produced. In the use of the invention, the electrochemical reduction of $CO_2$ into CO may advantageously be selective. In particular, in an advantageous embodiment, no formation of formic acid or formate is observed, while CO or syngas is produced.

In the use of the present invention, the complexes may be used as homogenous catalysts.

In another embodiment, the complexes of the porphyrins of formula (I) as defined above with iron are used as immobilized catalysts (for heterogeneous catalysis). In this embodiment, the catalyst may also be immobilized on at least one electrode (preferably the cathode) using a binder. Therefore, in this embodiment, at least one electrode (preferably the cathode) comprises a composition comprising the catalyst and a binder. Advantageously, the composition is coated as a film on the electrode.

Advantageously, the binder is selected from the group consisting of conductive polymers, ionomers and/or fluoropolymers preferably a fluorinated polymer with sulfonic end groups such as a perfluorosulfonic acid. Preferred examples of binders are ionomers such as polystyrene sulfonates, and in particular Nafion®, a sulfonated tetrafluoroethylene based fluoropolymer-copolymer.

Advantageously, conductive materials are added to the binder to improve the conductivity of the system. Preferred examples of conductive materials are conductive carbon materials, and in particular carbon powder and carbon nanotubes.

The present invention further concerns a method of reducing electrochemically $CO_2$ into CO using as catalyst a complex of a porphyrin of formula (I) as defined above with iron, preferably a Fe(III) to Fe(0) complex, and salts thereof, in an electrochemical cell comprising at least a cathode, an anode, an electrolyte solution comprising water as the solvent, the substrate $CO_2$, and a power supply providing the energy necessary to trigger the electrochemical reactions involving the substrate.

The electrochemical cell preferably comprises several compartments, in particular two compartments, advantageously separated by a proton exchange membrane, such as a proton exchange membrane comprising or consisting of a ionomer or/and fluoropolymer, preferably a fluorinated polymer with sulfonic end groups such as a perfluorosulfonic acid. In the case of an electrochemical cell comprising two compartments, the compartment comprising the cathode is called the cathodic compartment, while the compartment comprising the anode is called the anodic compartment. In this particular embodiment, the invention relates to a method of reducing electrochemically $CO_2$ into CO using as catalyst a complex of a porphyrin of formula (I) as defined above with iron, preferably a Fe(III) to Fe(0) complex, and salts thereof, in an electrochemical cell comprising:

- a cathodic compartment with a cathode and a cathodic electrolyte solution,
- an anodic compartment with an anode and an anodic electrolyte solution,
- the substrate $CO_2$,
- and a power supply providing the energy necessary to trigger the electrochemical reactions involving the substrate

wherein the cathodic and anodic electrolyte solutions comprise water as the solvent. The substrate $CO_2$ is preferably only in the cathodic compartment. The catalyst is preferably only in the cathodic compartment.

Preferably, the method of the invention is carried out at a temperature between 15 and 30 °C, more preferably, between 20 and 25 °C.

Advantageously, the potential applied to the cathode is between -2.5 V and -0.5 V versus NHE, more advantageously between -2.0 V and -0.5 V versus NHE, more advantageously between -1.5 V and -0.7 V versus NHE, more advantageously between - 1.3 V and -0.8 V versus NHE or between -1.1 V and -0.8 V versus NHE, in particular for a pH of between 6.5 and 7.5.

Advantageously, the electrolyte is an aqueous solution with a pH of between 6.5 and 7.5.

For example, the electrochemical reduction of $CO_2$ into CO is carried out at a $CO_2$ pressure of at least 1 bar. When the electrochemical cell comprises at least two compartments, $CO_2$ gas is preferably present only in the cathodic compartment. In a particular example, the electrochemical reduction of $CO_2$ into CO may be carried out at a $CO_2$ pressure of 1 bar (atmospheric pressure), preferably only in the cathodic compartment. In another example, the electrochemical reduction of $CO_2$ into CO may be carried out at a pressure of more than 1 bar, for instance of between 1 and 30 bars, such as between 2 and 10 bars or 2 and 3 bars, preferably only in the cathodic compartment.

When production of CO is sought for, the electrolyte, especially in the cathodic compartment of the cell, is typically devoid of any buffer. In particular, the electrolyte, especially in the cathodic compartment, does not contain any phosphate buffer. The electrolyte, especially in the cathodic compartment, may in particular consist of an aqueous solution of alkali metal salts, preferably chloride and carbonate salts.

Advantageously, the electrolyte, especially in the cathodic compartment, may consist of a mixture of aqueous KCl (potassium chloride), preferably in a concentration of between 0.001 M and 1 M, more preferably of 0.1 M and aqueous $KHCO_3$ (potassium bicarbonate), preferably in a concentration of between 0.01 and 1 M, more preferably of between 0.1 M and 0.5 M.

When production of syngas is sought for, the electrolyte may contain a buffer such as a phosphate buffer.

In this second embodiment, the catalyst may be used as a homogenous catalyst. In this case, the complex of the porphyrin of formula (I), as defined above, is in a concentration, in the electrolyte solution, of between 0.0001 and 0.01 M, preferably 0.001 M.

Preferably, the catalyst is immobilized on at least one electrode (preferably the cathode) using a binder. Therefore, in this embodiment, at least one electrode (preferably the cathode) comprises a composition comprising the catalyst and a binder. Advantageously, the composition is coated as a film on the electrode.

Advantageously, the binder is selected from the group consisting of conductive polymers, ionomers and/or fluoropolymers preferably a fluorinated polymer with sulfonic end groups such as a perfluorosulfonic acid. Preferred

examples of binders are ionomers such as polystyrene sulfonates, and in particular Nafion®, a sulfonated tetrafluoroethylene based fluoropolymer-copolymer. This embodiment is of particular interest because of the complementary nature of the ionic charges of the complexes used in the invention (positively charged anilinium groups) and of the binder (negatively charged sulfonic groups). Advantageously, conductive materials are added to the binder to improve the conductivity of the system. Preferred examples of conductive materials are conductive carbon materials, and in particular carbon powder and carbon nanotubes.

The method of the invention allows production of CO or syngas, depending on the reaction conditions. The method of the invention produces only minimal amounts of undesired byproducts. Preferably, no formation of formic acid or formate is observed, in particular when production of pure CO is sought for.

When syngas (a mixture of CO and $H_2$) is produced in water, the pH of the aqueous solution (especially through appropriate choice of buffer) and the potential applied to the cathode may be adjusted so as to tune (or choose) the $CO/H_2$ molar ratio of the produced gas.

For instance, for producing pure CO in water, the pH of the solvent is preferably of between 6.5 and 7.5, and the solvent and/or electrolyte is devoid of buffer. In this embodiment, the pH of the solvent/electrolyte is advantageously adjusted by adding , alkali metal salts, preferably hydroxide, carbonate or bicarbonate alkali metal salts, and more preferably KOH or $KHCO_3$, even more preferably $KHCO_3$. The faradic yield of CO is thus advantageously of between 90% and 100%, even more preferably of between 95% and 100%, depending on the potential applied to the cathode. Preferably, in this embodiment, the potential applied to the cathode vs NHE is of between -1.25V and - 1.0V, more preferably between -1.21 V and -1.05V, even more preferably of -1.1V. Even more preferably, in this embodiment, the potential applied to the cathode vs NHE is advantageously of between -1.1V and -0.75V, more preferably between -1.0 V and - 0.8V, even more preferably of -0.86V. In this embodiment, the intensity of the cathode is typically below 20 A/m$^2$, for instance below 1 A/m$^2$.

The present description further describes to an electrochemical cell comprising at least:

- an electrolyte solution comprising water as the solvent a supporting electrolyte such as a salt, preferably a mixture of alkali metal, such as hydroxide, carbonate, bicarbonate or chloride alkali metal salts, and the substrate $CO_2$,
- a power supply providing the energy necessary to trigger the electrochemical reactions involving the substrate, and
- two electrodes (an anode and a cathode),

and further comprising the complex of a porphyrin of formula (I) as defined above, with iron, preferably a Fe(III) to Fe(0) complex, and salts thereof,
as catalyst for the electrochemical reduction of $CO_2$ into CO in water.

The present invention further relates to the use of a complex of a porphyrin of formula (I) as defined above or below with iron, preferably a Fe(III) to Fe(0) complex, and salts thereof, as catalyst for reducing electrochemically $CO_2$ into CO in water, wherein said complex is comprised in a two-compartment electrochemical cell comprising at least:

- an electrolyte solution comprising water as the solvent, a supporting electrolyte such as a salt, preferably alkali metal salts, and more preferably carbonate and chloride alkali metal salts or mixtures thereof, and the substrate $CO_2$,
- a power supply providing the energy necessary to trigger the electrochemical reactions involving the substrate, and
- two electrodes (an anode and a cathode).

The particular and preferred embodiments of the porphyrin of formula (I) are as described above regarding the use of the invention.

For example, electrochemical reduction of $CO_2$ into CO in the electrochemical cell of the invention may be carried out at a $CO_2$ pressure of at least 1 bar. In a particular example, the electrochemical reduction of $CO_2$ into CO may be carried out at a $CO_2$ pressure of 1 bar (atmospheric pressure). In another example, the electrochemical reduction of $CO_2$ into CO may be carried out at a pressure of more than 1 bar, for instance of between 1 and 30 bars, such as between 2 and 3 bars.

In a particular embodiment, the electrochemical cell of the invention is saturated with $CO_2$ gas, that is to say, both the atmosphere and the electrolyte solution are saturated with $CO_2$.

The electrochemical cell of the invention may be used as a closed system regarding $CO_2$ gas. This embodiment is of particular interest when the electrochemical cell of the invention is used to study the catalytic mechanism of the reduction of $CO_2$ into CO, as such a configuration allows for a tight control of gas evolution.

Conversely, the electrochemical cell of the invention may be used in an open environment, with a flow of $CO_2$ which saturates the electrolyte and solvent of the electrochemical cell of the invention. This configuration is particularly useful when industrial production of CO or syngas is sought for.

It is of note that CO is typically not soluble in the electrolyte solution, so that it is collected directly as a gas.

The power source may comprise one or more of power supplies (e.g., batteries and a photovoltaic cell).

Preferably, the anode is a carbon, iridium oxide, cobalt oxide, cobalt phosphate, stainless steel or platinum electrode, for example it is a carbon, iridium oxide, cobalt oxide or platinum electrode. More preferably, the anode is an iridium oxide, cobalt oxide, cobalt phosphate or platinum electrode, and even more preferably it is an iridium oxide, cobalt oxide or platinum electrode.

Advantageously, the cathode is a carbon, stainless steel or mercury electrode.

Preferably, it is a carbon electrode or a stainless steel electrode. More preferably, it is a carbon electrode such as a carbon crucible, carbon felt or carbon paper.

In a particular embodiment, the electrochemical cell further comprises a third electrode, preferably a reference electrode such as a standard calomel electrode or a silver chloride electrode.

The electrolyte is preferably an aqueous solution with a pH of between 6.5 and 7.5.

When production of CO is sought for, the electrolyte is typically devoid of any buffer.

In particular, the electrolyte does not contain any phosphate buffer. The electrolyte may in particular consist of an aqueous solution of KCl (potassium chloride), preferably in a concentration of between 0.001 M and 1M, more preferably of 0.1M.

When production of syngas is sought for, the electrolyte may contain a buffer such as phosphate buffer.

The catalyst may be used as a homogenous catalyst. In this case, the complex of the porphyrin of formula (I), as defined above, is in a concentration, in the electrolyte solution, of between 0.0001 and 0.01 M, preferably 0.001 M.

The electrochemical cell may comprise one or several compartments.

The electrochemical cell involved in the use of the invention preferably comprises several compartments, in particular two compartments (the cathodic compartment comprising the cathode, and the anodic compartment comprising the anode), advantageously separated by a proton exchange membrane comprising or consisting of a ionomer or/and fluoropolymer, preferably a fluorinated polymer with sulfonic end groups such as a perfluorosulfonic acid.

The present invention thus preferably relates to the use of a complex of a porphyrin of formula (I) as defined above or below with iron, preferably a Fe(III) to Fe(0) complex, and salts thereof, as catalyst for reducing electrochemically $CO_2$ into CO in water, wherein said complex is comprised in an electrochemical cell comprising at least:

- a cathodic compartment with a cathode and a cathodic electrolyte solution comprising water as the solvent, a supporting electrolyte such as a salt, preferably a mixture of alkali metal (such as hydroxide, carbonate, bicarbonate or chloride alkali metal salts), and the substrate $CO_2$,
- an anodic compartment with an anode and an anodic electrolyte solution comprising water as the solvent,
- and a power supply providing the energy necessary to trigger the electrochemical reactions involving the substrate,

and further comprising the complex of a porphyrin of formula (I) as defined above, with iron, preferably a Fe(III) to Fe(0) complex, and salts thereof, as catalyst for the electrochemical reduction of $CO_2$ into CO in water.

In this embodiment, the cathodic and anodic electrolytes are not necessarily the same.

For example, the cathodic electrolyte may be for instance a mixture of KCl and $KHCO_3$, while $K_2HPO_4$ may be used as the anodic electrolyte. In addition, in a preferred embodiment, $CO_2$ is present only in the cathodic compartment, and is thus partially dissolved in the cathodic electrolyte, while the anodic electrolyte is devoid of dissolved $CO_2$, as well as $HCO_3^-$ and $HCO_3^{2-}$ anions.

When production of pure CO in water is sought for, the pH of the cathodic and of the anodic electrolyte is preferably of between 6.5 and 7.5 in each compartment.

Advantageously, the pH of the cathodic and of the anodic electrolyte is identical.

When CO production is sought for, the cathodic electrolyte is preferably devoid of any buffer. In particular, the cathodic electrolyte does not contain any phosphate buffer. The cathodic electrolyte may in particular consist of an aqueous solution of alkali metal salts, preferably chloride and carbonate salts, or mixtures thereof. Advantageously, the cathodic electrolyte may consist of a mixture of KCl (potassium chloride), preferably in a concentration of between 0.001 M and 1M, more preferably of 0.1M and $KHCO_3$ (potassium bicarbonate), preferably in a concentration of between 0.01 and 1M, more preferably of between 0.1M and 0.5M. The anodic electrolyte may comprise water as the solvent, and a buffer, preferably an alkali metal salt, and more preferably a mixture of $KH_2PO_4$ (monopotassium phosphate) and $K_2HPO_4$ (dipotassium phosphate) in an overall concentration of between 0.01 M and 1 M, more preferably of between 0.1 M and 0.6 M, and even more preferably of 0.4 M.

When production of syngas is sought for, the cathodic electrolyte may contain a buffer such as phosphate buffer.

For example, in this embodiment, $CO_2$ gas is present only in the cathodic compartment and the $CO_2$ pressure in the cathodic compartment of the electrochemical cell of the invention may be of at least 1 bar. In a particular example, the electrochemical reduction of $CO_2$ into CO may be carried out at a $CO_2$ pressure of 1 bar (atmospheric pressure), preferably only in the cathodic compartment. In another example, the electrochemical reduction of $CO_2$ into CO may be carried out at a $CO_2$ pressure of more than 1 bar, for instance of between 2 and 30 bars, preferably only in the cathodic compartment.

Preferably, the catalyst is immobilized on at least one electrode (preferably the cathode) using a binder. Therefore, in this embodiment, at least one electrode (preferably the cathode) comprises a composition comprising the catalyst and a binder.

Advantageously, the composition is coated as a film on the electrode.

Advantageously, the binder is selected from the group consisting of conductive polymers, ionomers and/or fluoropolymers preferably a fluorinated polymer with sulfonic end groups such as a perfluorosulfonic acid. Preferred examples of binders are ionomers such as polystyrene sulfonates, and in particular Nafion®, a sulfonated tetrafluoroethylene based fluoropolymer-copolymer. This embodiment is of particular interest because of the complementary nature of the ionic charges of the complexes used in the invention (positively charged anilinium groups) and of the binder (negatively charged sulfonic groups). Advantageously, conductive materials are added to the binder to improve the conductivity of the system. Preferred examples of conductive materials are conductive carbon materials, and in particular carbon powder and carbon nanotubes. Said binder ensures: 1) a good conductivity, as well as 2) a good permeation of protons, $CO_2$ and CO through the composition by means of porosity of the polymer and/or the presence of acid-base functional groups within the polymer structure.

The present invention further concerns a method comprising performing electrochemical reduction of $CO_2$ using the electrochemical cell of the present invention, thereby producing CO gas or syngas in water.

The method of the invention allows production of CO or syngas, depending on the reaction conditions. The method of the invention produces only minimal amounts of undesired byproducts. Preferably, no formation of formic acid or formate is observed, in particular when production of pure CO is sought for.

When syngas (a mixture of CO and $H_2$) is produced in water, the pH of the aqueous solution (through appropriate choice of buffer) and the potential applied to the cathode may be adjusted so as to tune (or choose) the CO/$H_2$ molar ratio of the produced gas.

For instance, for producing pure CO in water, the pH of the solvent is preferably of between 6.5 and 7.5, and the solvent and/or electrolyte is devoid of buffer. In this embodiment, the pH of the solvent/electrolyte is advantageously adjusted by adding alkali metal salts, preferably hydroxide, carbonate or bicarbonate alkali metal salts, more preferably KOH or $KHCO_3$, even more preferably $KHCO_3$. The faradic yield of CO is thus advantageously of between 90% and 100%, even more preferably of between 95% and 100% depending on the potential applied to the cathode. Preferably, in this embodiment, the potential applied to the cathode vs NHE is of between -1.25V and - 1.0V, more preferably between -1.21 V and -1.05V, even more preferably of -1.1V.

More preferably, in this embodiment, the potential applied to the cathode vs NHE is of between -1.15V and -0.75V, more preferably between -1.1 V and -0.85V, even more preferably of -0.96V. In this embodiment, the current density of the cathode is typically below 30 A/m$^2$, in particular below 1 A/m$^2$.

The following examples, while relating to particular embodiments of the invention, are intended for purposes of illustration only and are not intended to limit the scope of the invention.

## EXAMPLES

As used herein, "$TOF_0$" represents the TurnOver Frequency at zero overpotential. The value of TOFo is obtained from extrapolation of the TOF vs. overpotential curve at zero overpotential. The TOF vs. overpotential curve is obtained from the experimental measurement of the current density (*I*) as function of potential (E) using cyclic voltammetry. For example, in the case of a simple mechanism (i.e. if the chemical steps in the catalytic loop are equivalent to a single step characterized by an apparent catalytic constant) the following relationship can be used:

$$TOF = \frac{I}{F\sqrt{\frac{D}{k_{cat}}C_{cat}^{0}}}$$

with *D* being the diffusion coefficient of the catalyst, $C_{cat}^{0}$ being its concentration in solution and $k_{cat}$ the catalytic rate constant. The value of $TOF_0$ is preferably obtained from extrapolation of the TOF vs. overpotential curve at zero overpotential. Said TOF vs. overpotential curve is for instance obtained such as described in Costentin et al ChemElectroChem, 2014, 1, 1226-1236, or calculated as detailed in Costentin et al, Science 2012 338, 90.

### Example 1. Synthesis and Characterization of complexes for use in the present invention.

*Chemicals.* Methanol was distilled over calcium hydride; THF was dried over sodium then distilled after addition of benzophenone. Both solvents were freshly distilled or stored overnight under an argon atmosphere. All other starting materials were obtained from Sigma-Aldrich, Fluka, Alfa Aesar, and Merk; they were used as received without further

purification. $^1$H NMR spectra were recorded on a Bruker Avance III 400-MHz spectrometer and were referenced to the resonances of the solvent used.

*Synthesis of Iron(III) 5,10,15,20-Tetra(4'-N,N,N-TriMethyl-Anilinium) Porphyrin Pentachloride (WSCAT).*

*Procedure 1.* A solution of commercial 5,10,15,20-Tetra(4'-N,N,N-TriMethylAnilinium)Porphyrin Tetrachloride (51 mg, $5.2 \times 10^{-5}$ mol), anhydrous iron (II) bromide (201 mg, $9.3 \times 10^{-4}$ mol), and 2,6-lutidine (60 $\mu$L, $5.2 \times 10^{-4}$ mol) in dry methanol was degassed by Argon for 15 minutes; the mixture was stirred at reflux under inert atmosphere for 7 days. After methanol was removed, the resulting solid was sonicated in THF and filtered. The brown solid on the glass frit was washed with dichloromethane and dissolved in methanol; after the mixture was concentrated under reduced pressure, a small amount of concentrated HCl was added with a large quantity of THF to give porphyrin **WSCAT** as a dark red powder (51 mg, 91%).

*Procedure 2.* A solution of commercial 5,10,15,20-Tetra(4'-N,N,N-TriMethylAnilinium)Porphyrin Tetrachloride A (102 mg, $9.5 \times 10^{-5}$ mol) and Mohr's salt ($Fe(NH_4)_2(SO_4)_2.6H_2O$, 324 mg, $1.5 \times 10^{-3}$ mol) in ultra pure water (41 mL, conductivity 0.060 $\mu$S) was degassed by Argon for 10 minutes; the mixture was stirred at 85 °C under inert atmosphere for 3 hours.

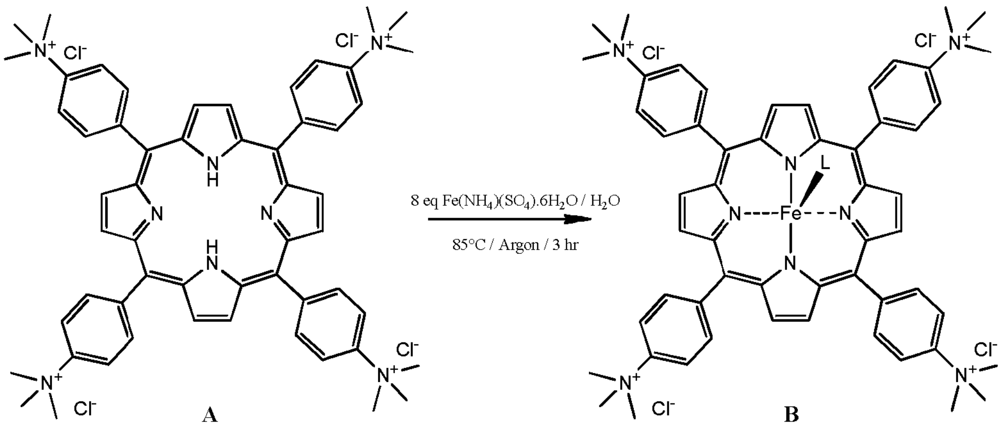


Product **B** is precipitated by adding 10 equivalents $NH_4PF_6$ (155 mg, $9.5 \times 10^{-4}$ mol). The resulting suspension is centrifuged for 10 minutes at 10,000 rpm to allow a better separation of liquid and solid phases. The solid is collected and washed with 25 mL ultra pure water + 10 equivalents $NH_4PF_6$ (155 mg, $9.5 \times 10^{-4}$ mol).

Traces of initial free-base porphyrin are removed by washing the solid with 15 mL acetone/$CH_2Cl_2$ (1:1), then 5 mL $CH_3OH$, and eventually 5x5 mL acetone/$CH_2Cl_2$ (1:1). Then, the residue is treated with acetone (22.5 mL) and 2.5 mL concentrated HCl (37 % in water) is added dropwise to exchange both iron ligand and anilinium counter-ions. The resulting suspension is sonicated for 10 minutes then centrifuged for 10 minutes at 10,000 rpm. After the supernatant is removed, the solid phase is collected and washed with 25 mL acetone. The residue is then dissolved in a minimum of methanol and precipitated with ethyl acetate. The solvent is removed *in vacuo* to yield **WSCAT** as a dark red powder (49.9 mg, 44%).

*Synthesis of FeF5TMA.*

## Reaction Scheme

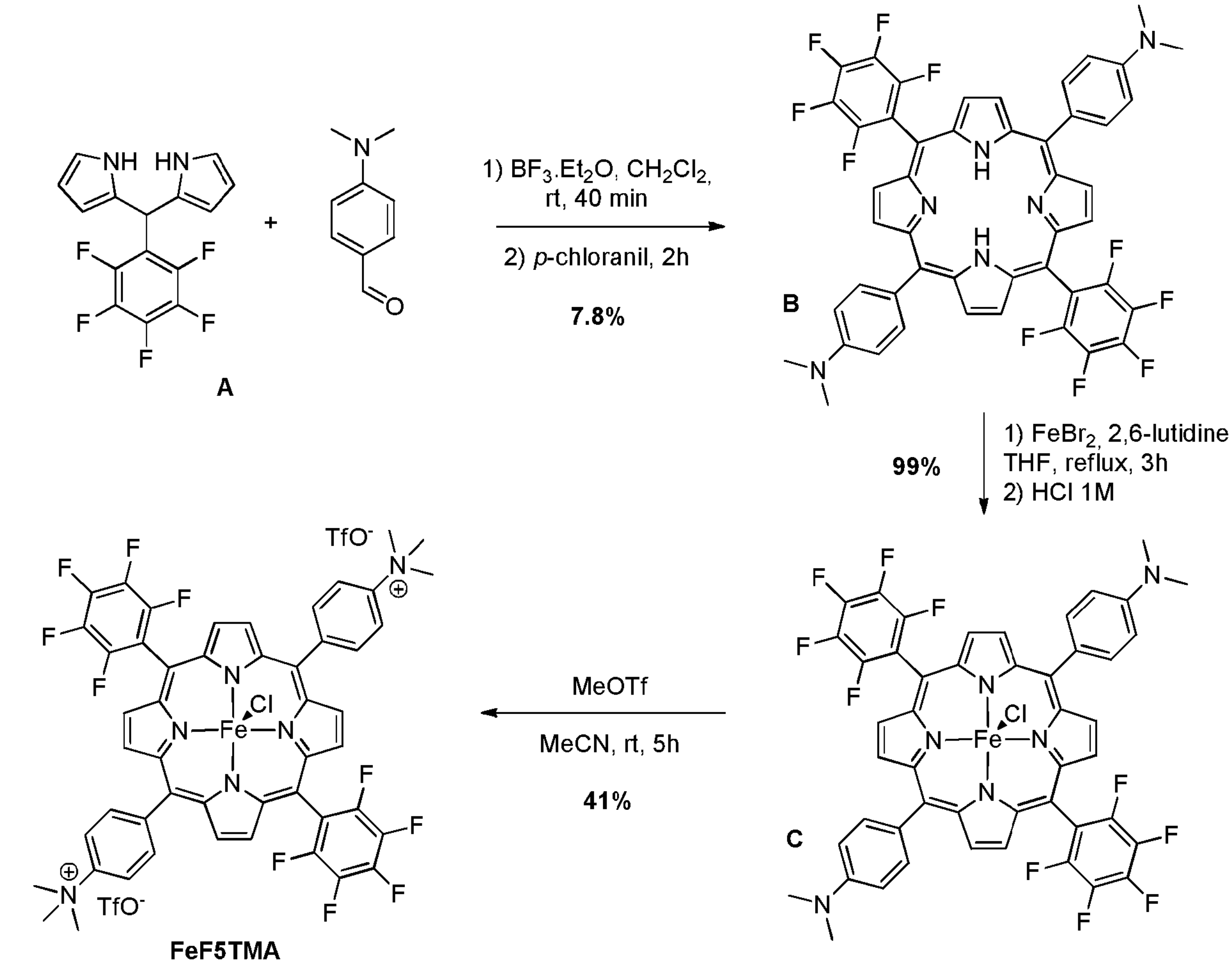

A B C FeF5TMA

*Step 1: synthesis of intermediate B.* Dipyrromethane **A** (1 g, $3.2x10^{-3}$ mol), 4-(Dimethylamino)benzaldehyde (478 mg, $3.2x10^{-3}$ mol) were solubilized in $CH_2Cl_2$ (640 mL). After the solution has been degassed with argon for 10 minutes, $BF_3.Et_2O$ (0.79 mL, $6.4x10^{-3}$ mol) was added dropwise and the mixture was stirred under argon for 40 min in the dark. After that, p-chloranil (2.36 g, $9.6x10^{-3}$ mol) was added in one portion and the mixture was stirred 2h. The dark purple mixture was filtered through a short pad of silica ($CH_2Cl_2$/MeOH 10/0 to 9/1 as eluent). After evaporation of the solution, the residue was purified by column chromatography on silica gel (gradient elution from $CH_2Cl_2$/n-Hex = 5/5 to 10:0) to give **B** as a purple powder (220 mg, 7.8%). $^1H$ NMR (400 MHz, $CDCl_3$) $\delta$ : 9.04 (d, *J*= 4.8 Hz, 4H), 8.75 (d, *J*= 4.7 Hz, 4H), 8.08 (d, *J*= 8.6 Hz, 4H), 7.13 (d, *J*= 8.5 Hz, 4H), 3.26 (s, 12H), -2.69 (s, 2H).

*Step 2: synthesis of intermediate C.* A solution of **B** (101 mg, $1.15x10^{-4}$ mol), anhydrous iron (II) bromide (124 mg, $5.7x10^{-4}$ mol), and 2,6-lutidine (33 $\mu$L, $2.9x10^{-4}$ mol) in dry THF (30 mL) was degassed by Argon for 15 minutes; the mixture was stirred at reflux under inert atmosphere for 3h. After THF was removed, the resulting solid was solubilized in $CH_2Cl_2$ (50 mL) and washed successively with water (5x25 mL) and 1M HCl (25 mL). The organic phase was dried over $Na_2SO_4$, and the solvent removed *in vacuo* to give C as a dark red powder (110 mg, 99%).

*Step 3: synthesis of FeF5TMA.* Freshly distilled methyl triflate (35 $\mu$L, $3.1x10^{-4}$ mol) was added to a solution of **C** (15 mg, $1.5x10^{-5}$ mol) in dry MeCN (5 mL). After the mixture has been stirred under argon for 5h in the dark, the solvent was removed *in vacuo,* the solid residue was suspended in $Et_2O$, filtered on glass frit, washed with $CH_2Cl_2$, and dissolved in acetone. After the solvent was removed, the residue was suspended in $CH_2Cl_2$, filtered, was with $CH_2Cl_2$ and finally dissolved in acetone to give FeF5TMA as a dark red powder (8 mg, 41%).

**Example 2. Mechanistic studies for determining the TOF-overpotential relationship using cyclic voltammetry**

Cyclic voltammetric responses of WSCAT have been studied using the following experimental protocol.

*Experimental Section*

*Chemicals.* Solvents used in electrochemical experiments were N,N-DimethylFormamide (Acros, >99.8%, over

molecular sieves and stored under Argon atmosphere) and ultra pure water (TKA MicroPure, conductivity 0.055 μS.cm$^{-1}$); the supporting electrolytes were $NBu_4PF_6$ (Fluka, 99%) in DMF and KCl (Merk, 99.5%) in water. Phenol (Alfa-Aesar) was used as received.

*Cyclic voltammetry in DMF.* The working electrode was a 3 mm-diameter glassy carbon (Tokai) disk carefully polished and ultrasonically rinsed in absolute ethanol before use. The counter-electrode was a platinum wire and the reference electrode an aqueous SCE electrode. All experiments were carried out under argon or carbon dioxide (or a mixing of both gas) at 21°C, the double-wall jacketed cell being thermostated by circulation of water. Cyclic voltammograms were obtained by use of a Metrohm AUTOLAB instrument. Ohmic drop was compensated using the positive feedback compensation implemented in the instrument.

*Cyclic Voltammetry in water.* Cyclic voltammograms were obtained in a three-electrode cell by use of a Metrohm AUTOLAB potentiostats/galvanostat interfaced with Nova software. The working electrode was a 3-mm-diameter glassy carbon disk carefully polished with 1μm diamond paste (DP-PasteM) then thoroughly rinsed in acetone then absolute ethanol before use. The counter electrode was a platinum wire and the reference electrode was an aqueous SCE electrode. All experiments were carried out either under argon or carbon dioxide atmosphere at 21 °C, the double-wall jacketed cell being thermostated by circulation of water. Ohmic drop was compensated through the positive feedback compensation method implemented in the instrument. pH measurements were performed with Hanna pH210 and HI221 instruments and 6mm microelectrodes (Fisher).

*Results*

The results of the cyclic voltammetry studies are presented in figure 1.

As seen in figure 1a, a very high catalytic current is observed in cyclic voltammetry of a millimolar solution of WSCAT saturated with $CO_2$ at *pH* 6.7. In the absence of $CO_2$ (figure 1b), three successive waves are observed when starting from the $Fe^{III}$ complex with $Cl^-$ as counter ions and presumably as axial ligand. As expected, the shape of the first, $Fe^{III/II}$, wave reflects the strong axial ligation by $Cl^-$. The second wave is a standard reversible $Fe^{II/I}$ wave. The third wave is the wave of interest for catalysis. It is irreversible as opposed to what is observed in DMF (figure 1c), where all three waves are one-electron reversible waves, including the third $Fe^{I/0}$ wave, as with the simple Fe-TPP (iron tetraphenylporphyrin, for details see Costentin et al Proc. Natl. Acad. Sci. U.S.A. 2014, 111, 14990-14994). The irreversibility and somewhat increased current observed here in water presumably reflects some catalysis of acid reduction, if only the reduction of $CO_3H_2$ molecules and/or of proton issued from them. The considerable increase in current observed in the $Fe^{I/0}$ potential region when $CO_2$ is introduced into the solution is a clear and surprising (due to competition with water and/or acid reduction as well as possible reduction of anilinium groups) indication that catalysis is taking place.

It is roughly similar to what has been observed in DMF under one atmosphere $CO_2$ in the presence of a weak acid such as phenol (figure Id and J. Am. Chem. Soc. 2012, 134, 11235-11242; 19949-19950. b), J. Am. Chem. Soc. 2013, 135, 9023-9031).

These cyclic voltammetry studies have also allowed obtaining the Tafel plots presented in figure 3.

Selective formation of CO is further confirmed by electrolysis as described in example 3.

**Example 3 : Electrolysis results in water**

*Preparative-Scale Electrolysis in water.* Electrolyses were performed using Princeton Applied Research (PARSTAT 2273 and PARSTAT 4000) potentiostats interfaced with PowerSuite and VersaStudio softwares. The experiments were carried out in a cell with a carbon crucible as working electrode (the volume of the solution was 5 mL, active surface area was 16.4cm$^2$). The reference electrode was an aqueous SCE electrode and the counter electrode a platinum grid in a bridge separated from the cathodic compartment by a glass frit, containing a saturated oxalic acid + 0.1 M KCl aqueous solution.

The catalyst, WSCAT, is dissolved in the electrolyte solution and is in a concentration of 0.5 mM

The reactions are performed at 21°C.

Ohmic drop was minimized by immersing directly the reference electrode into the solution as close as possible to the working electrode. The role of oxalic acid is to serve as reactant at the anode, producing only $CO_2$ which diffusion toward the cathodic compartment is expected to have negligible effect on the yields of the cathodic reaction.

The electrolysis cell was purged with $CO_2$ for 20 min before electrolysis then sealed for quantitative experiments or under a continuous flux for the long-time-scale electrolysis to avoid the $CO_2$ consumption.

*Gas Detection.* Gas chromatography analyses of gas evolved in the headspace during the electrolysis were performed with an Agilent Technologies 7820A GC System equipped with a thermal conductivity detector. CO and $H_2$ production was quantitatively detected using a CP-CarboPlot P7 capillary column (27.46 m in length and 25 μm internal diameter). Temperature was held at 150°C for the detector and 34°C for the oven. The carrier gas was argon flowing at 9.5 mL/min at constant pressure of 0.5 bars. Injection was performed via a 250 μL gas-tight (Hamilton) syringe

previously degassed with $CO_2$. Conditions allowed detection of $H_2$, $O_2$, $N_2$, CO, and $CO_2$. Calibration curves for $H_2$ and CO were determined separately by injecting known quantities of pure gas.

*Ionic Chromatography.* Electrolyzed solutions were diluted tenfold or hundredfold then analyzed using a Dionex DX100 ionic chromatograph containing the following elements: CD-20 conductometric detector, ASRS-300 4mm conductivity suppressor, Dionex IonPac AS10 ionic exchange column of 4 mm in diameter. The eluant was aqueous NaOH 50 mM flowing at 1 mL/min.

*Results*

*TOF*

A preliminary estimation of the maximal turnover frequency through the foot-of-the-wave analysis leads to the exceptionally high figure of $10^7$ $s^{-1}$ (i.e., a second order rate constant of $2.5\times10^8$ $m^{-1}S^{-1}$).

*Selectivity at -0.97 V vs. NHE*

A first series of preparative scale electrolyses were performed at -0.97 V vs. NHE over electrolysis times between 1 and 4 hours. The current density was ca 0.1 mA/ $cm^2$ in all cases. CO was found to be largely predominant with formation of only a very small amount of hydrogen. Over five of these experiments the average faradaic yields of detected products were: CO: 90 %, $H_2$: 7 %, acetate: 1.4 %, formate: 0.7 %: oxalate 0.5 %. The catalyst was quite stable during these periods of time. The decrease in peak current registered before and after electrolysis was indeed less than 5%.

*Selectivity at -0.86 V vs. NHE*

A longer duration electrolysis (figure 2) was carried out at a somewhat less negative potential (-0.86 V vs. NHE) leading to a quasi-quantitative formation of CO (faradaic yield between 98 and 100%). After 72 hours electrolysis, the current has decreased by *ca* one-half but CO continues to be the only reaction product.

*Influence of a buffer on selectivity*

The addition of 0.1 M buffer other than the $CO_3H_2/CO_3H^-$ couple itself resulted in the exclusive formation of hydrogen. This was observed with a formic acid buffer *at pH* = 3.7, but also with a phosphate buffer adjusted at the *same pH* - 6.7 - as that where the electrolyses with no additional buffer were carried out. Although deserving a precise kinetic analysis, a likely interpretation of this noteworthy observation is as follows.

Although carbonic acid has a $pK_a$ -3.6 - as low as that of formic acid - 3.77, its equilibrium concentration is low (the hydration constant of $CO_2$ is only $1.7\times10^{-3}$).

Moreover the hydration reaction is not very fast: $k_{hydr} = 3\times10^2$ $s^{-1}$, being another obstacle to hydrogen evolution through the reduction of carbonic acid and another favorable factor for the direct reaction of $CO_2$ with the $Fe^0$ porphyrin.

Addition of 0.1 M phosphate buffer at pH 6.7 resulted in the formation of a 50-50 $CO/H_2$ syngas mixture

*Durability (stability of the catalysts)*

Besides catalytic performances evaluated through log*TOF*-$\eta$ relationship, durability is important in the evaluation of catalysts efficiency. It has been evaluated through estimation of the catalyst degradation over prolonged electrolysis

This estimation is based on recording cyclic voltammetry graphs in the electrolysis solution during electrolysis.

In terms of preparative scale electrolyses, the available pieces of information indicate that the stability of the WSCAT catalyst lasts over 3 days (figure 2).

## Example 4 : Electrolysis results in water with immobilized catalyst

*Preparative-Scale Electrolysis in water.* Electrolyses were performed using a Princeton Applied Research PARSTAT 4000 potentiostat interfaced with VersaStudio software.

The experiment was carried out in a two-compartment cell. The reference electrode was an aqueous SCE electrode and the counter electrode a platinum grid in a bridge separated from the cathodic compartment by a glass frit. Ohmic drop was minimized by immersing directly the reference electrode into the solution as close as possible to the working electrode. The electrolysis cell was purged with $CO_2$ for 15 min before electrolysis then sealed for quantitative experiments or under a continuous flux for the long-time-scale electrolysis to avoid the $CO_2$ consumption.

*Gas Detection.* Gas chromatography analyses of gas evolved in the headspace during the electrolysis were performed with the same techniques than detailed in Example 3.

*Immobilization.* The cathode was made of glassy carbon. The catalyst WSCAT is immobilized in a thin film onto the electrode surface; catalyst mass loading was 0.08 mg/cm$^2$. The film is prepared as a suspension of catalyst WSCAT, polymeric binder (Nafion®), and conductive nanomaterial (carbon powder) in isopropanol. Electrolyte in both compartments is ultra pure water with 0.1 M $NaClO_4$ and 0.1 M $NaHCO_3$ under 1 atmosphere of $CO_2$. Initial pH of the solution is 6.7.

<u>*Results*</u>

*Selectivity at -0.96 V vs. NHE*

A first series of preparative scale electrolyses were performed at -0.96 V vs. NHE during 4 hours. In multiple experiments, average current density was 0.6 mA/cm$^2$ (Figure 4). This heterogeneous system remains very selective towards $CO_2$ reduction with a faradic efficiency of 98 % and 1 % for CO and $H_2$ respectively.

*Durability (stability of the catalysts)*

A large increase in turnover numbers was witnessed when the catalyst WSCAT was immobilized. TONs in multiple 4-hours experiments were well above 500. The solution was analyzed after the preparative-scale electrolyses with UV-Visible spectroscopy techniques; leached WSCAT concentration in solution was below the 0.1 $\mu$M limit of detection. Therefore, although the WSCAT catalyst is water-soluble, it remains immobilized in the catalytic film.

**<u>Example 5 : Long-term electrolysis results in water with immobilized catalyst</u>**

*Long-term Preparative-Scale Electrolysis in water.* Electrolyses were performed using a Metrohm Autolab potentiostat interfaced with Nova software. The experiment was carried out in a two-compartment cell separated by a Nafion® NRE212 Proton-Exchange Membrane.

*Cell design.* The reference electrode was an aqueous SCE electrode. Ohmic drop was minimized by increasing the salt concentration in both compartments. The electrolyses were performed under a continuous flux to avoid the $CO_2$ consumption. Electrolyte in the cathodic compartment was ultra pure water with 0.1 M KCl and 0.5 M $KHCO_3$ under 1 atmosphere of $CO_2$ (initial pH 7.3). Electrolyte in the anodic compartment was ultra pure water with 0.2 M $HK_2PO_4$ and 0.2 M $H_2KPO_4$ under inert Argon atmosphere (initial pH 6.7). The counter electrode was a Cobalt-Phosphate film deposited on a stainless steel mesh.

*Immobilization.* The cathode was made of Toray carbon paper. The catalyst WSCAT is immobilized in a thin film onto the electrode surface; catalyst mass loading was 0.4 mg/cm$^2$. The film is prepared as a suspension of catalyst WSCAT, polymeric binder (Nafion®), and conductive nanomaterial (carbon powder) in isopropanol.

*Gas Detection.* Gas chromatography analyses of gas evolved in the headspace during the electrolysis were performed with the same techniques than detailed in Examples 3 and 4.

<u>*Results*</u>

*Durability and Selectivity at -0.96 V vs. NHE*

This heterogeneous system remains stable over time and selective towards $CO_2$ reduction with a faradic efficiency of 93 % and 7 % for CO and $H_2$ respectively after 30 hours of electrolysis at -0.96 V vs NHE. Average current density was 0.7 mA/cm$^2$ (Figure 5) and TON reached 917.

*Efficiency.* The cell potential is stable and remains close to 2.5 V over the course of the electrolysis. The overall efficiency of the cell to perform the full reaction $CO_2 \rightarrow CO + ½O_2$ can be written as $\eta_{CO} = s_{CO} \cdot \frac{E^0_{O_2/H_2O} - E^0_{CO_2/\mathrm{CO}}}{U_{cell}}$ (where $s_{CO}$ is the selectivity for CO over $H_2$, $E^0_{\mathrm{P/Q}}$ are the standard potentials of each half-reaction, and $U_{cell}$ is the cell potential) and reaches an average of 50 $\pm$ 1 % during the whole electrolysis.

**<u>Example 6. Benchmarking of WSCAT with prior art complexes in organic medium:</u>**

In view of the paucity of data concerning molecular catalysis of the $CO_2$-to-CO conversion in water, benchmarking with other catalysts in terms of overpotential and turnover frequency in water does not seem possible at the moment.

A comparison with the characteristics of other catalysts obtained in an aprotic solvent such as DMF or acetonitrile was thus made, starting from the results shown in figure 1c and Id. The standard potential of the $Fe^I/Fe^0$ couple in DMF (figure 1c) is -1.23 V vs. NHE. A systematic analysis of the wave obtained under 1 atm. $CO_2$ and presence of 3 M phenol was carried out according to the "foot-of-the wave approach", which aims at minimizing the effects of side-phenomena interfering at large catalytic currents. This technique has been previously described in details and successfully applied in several instances. It was applied here, assuming that the reaction mechanism is of the same type as for Fe-TPP in the presence of phenol:

$$^{-}Fe(I) + e \rightleftharpoons {}^{2-}Fe(0)$$

$$^{2-}Fe(0) + CO_2 + PhOH \rightleftharpoons {}^{-}Fe(I)CO_2^{\cdot -}...HOPh$$

$$^{-}Fe(I)CO_2^{\cdot -}...HOPh + PhOH \rightarrow Fe(II)CO + H_2O + 2\,PhO^-$$

$$Fe(II)CO + {}^{2-}Fe(0) \rightarrow 2\,{}^{-}Fe(I) + CO$$

Combination of the foot-of-the wave analysis with increasing scan rates, which both minimize the effect of side-phenomena, allowed the determination of the turnover frequency as a function of the overpotential, leading to the "catalytic Tafel plot" for the WSCAT catalyst shown as the upper curve in figure 3. The turnover frequency (TOF), takes into account that the molecules that participate to catalysis are only those contained in the thin reaction-diffusion layer adjacent to the electrode surface in pure kinetic conditions. The overpotential, $\eta$, is the difference between the standard potential of the reaction to be catalyzed and the electrode potential. Correlations between TOF and $\eta$ provide catalytic Tafel plots that are able to benchmark the intrinsic properties of the catalyst independently of parameters such as cell configuration and size. Good catalysts stand in the upper left corner and bad catalysts in right bottom corner. These plots allow one to trade between the rapidity of the catalytic reaction and the energy required to run it. The other Tafel plots shown in figure 3 are simply the repeat of what has been established in details in Costentin et al Proc. Natl. Acad. Sci. U.S.A. 2014, 111, 14990-14994.

It clearly appears that WSCAT is the best catalyst of the set of molecules represented in figure 3. It is expected that the electron withdrawing properties of the para-N-trimethylammonium groups lead to a positive shift of the $Fe^I/Fe^0$ couple, being thus a favorable factor in terms of overpotential (positive shifts of 200 mV vs. Fe-TPP, 100 mV vs. CAT and 40 mV vs. FCAT). What is more surprising is that this effect, which tends to decrease the electron density on the iron and porphyrin ring at the oxidation state 0, does not slow down the catalytic reaction.

Figure 3 illustrates the ensuing benchmarking of all catalysts in organic solvents.

The conclusion for the performances of WSCAT in DMF is twofold:

(i) The iron porphyrin generated electrochemically under its $Fe^0$ form (WSCAT) operated in the presence of 3 M phenol in DMF appears as the best homogeneous catalyst of the $CO_2$-to-CO conversion to date. This clearly appears after benchmarking of presently available catalyst of this reaction under the form of catalytic Tafel plots relating turnover frequency with overpotential (figure 3). Such plot allows optimizing the catalytic reaction by appropriately compromising between rapidity and energy costs. A further advantageous feature of WSCAT is that it relies on one of the cheapest and most earth-abundant metal.

(ii) The total suppression of ortho-phenol groups was expected to lower the efficiency of the catalysts at least in organic solvents. However, it was observed that this is not the case, and that the substitution has a global positive effect.

## Summary

Without wishing to be bound by theory, it may be concluded that substitution of the four para-hydrogens of Fe-TPP (Fe-Tetraphenylporphyrin) by trimethylammonium groups has produced a water-soluble catalyst that is able, for the first time, to catalyze the conversion of carbon dioxide into carbon monoxide in pH-neutral plain water with very little production of hydrogen.

This appears as a noticeable result in view of the hydration of $CO_2$, producing carbonic acid - a low $pK_a$ acid - the catalytic reduction of which, and/ or of the hydrated protons it may generate, into hydrogen might have been a serious competing pathway as well as the possible reduction of anilinium groups. This noticeable result seemingly derives not

only from the relatively small value of the hydration constant but also from the slowness of this reaction. As judged from its performances in DMF, WSCAT catalyst moreover appears as particularly efficient in terms of catalytic Tafel plots relating the turnover frequency to the overpotential.

What is more, an electrochemical cell wherein the catalyst WSCAT is immobilized onto the cathode surface by means of a binder is reported. This immobilization technique enables the WSCAT catalyst to remain electrochemically active and bound to the electrode (without leaking into the aqueous solution despite being water-soluble), while increasing stability and selectivity for CO production.

Finally, coupling of the cathodic reduction of $CO_2$ to CO with the anodic oxidation of water to $O_2$ and interposing a proton-exchange membrane between these compartments lead to an efficient (above 50%) overall transformation $CO_2 \rightarrow CO + \frac{1}{2} O_2$.

## Claims

1. Use of a complex of a porphyrin of formula (I) below:

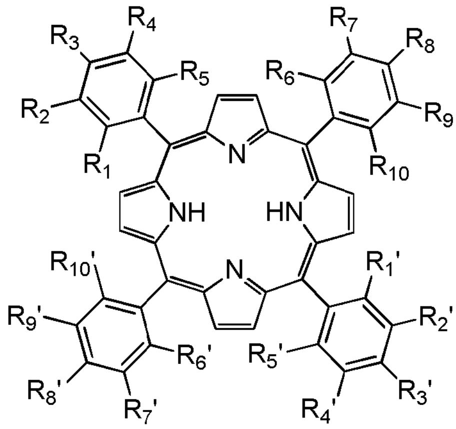

(I)

wherein $R_1$ to $R_{10}$ and $R_1$' to $R_{10}$' are independently selected from the group consisting of H, F and $N^+(C_1\text{-}C_4\ alkyl)_3$, and wherein:

at least 2 and at most 6 groups among $R_1$ to $R_{10}$ and $R_1$' to $R_{10}$' being independently $N^+(C_1\text{-}C_4\ alkyl)_3$, and,
at least one of $R_6$, $R_{10}$, $R_6$' and $R_{10}$' is selected from the group consisting of H and F, and
if at least one of $R_1$ to $R_5$ represents $N^+(C_1\text{-}C_4\ alkyl)_3$, then at least one of the other $R_1$ to $R_5$ is H, and
if at least one of $R_{1'}$ to $R_{5'}$ represents $N^+(C_1\text{-}C_4\ alkyl)_3$, then at least one of the other $R_{1'}$ to $R_{5'}$ is H, and
if at least one of $R_6$ to $R_{10}$ represents $N^+(C_1\text{-}C_4\ alkyl)_3$, then at least one of the other $R_6$ to $R_{10}$ is H, and
if at least one of $R_{6'}$ to $R_{10}$' represents $N^+(C_1\text{-}C_4\ alkyl)_3$, then at least one of the other $R_{6'}$ to $R_{10}$' is H,
with iron in the oxidation state 0 to +III,
and salts thereof,
as catalyst for the electrochemical reduction of $CO_2$ into CO in water,
wherein $CO_2$ is reduced into CO by the porphyrin of formula (I) with iron in the state Fe(0).

2. The use of claim 1, wherein, in formula (I), $R_3$ and $R_3$' independently represent $N^+(C_1\text{-}C_4\ alkyl)_3$.

3. The use of claim 2, wherein, in formula (I), $R_8$ and $R_8$' independently represent $N^+(C_1\text{-}C_4\ alkyl)_3$.

4. The use of any of claims 1 to 3, wherein the porphyrin of formula (I) is

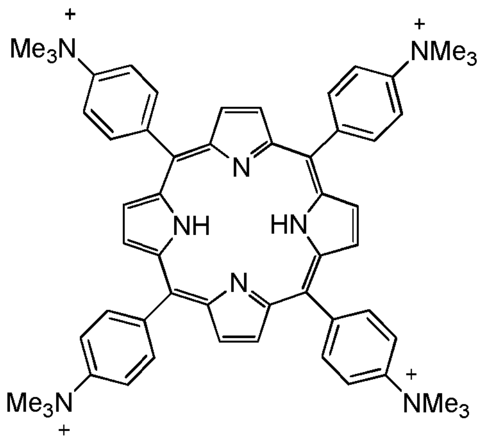

**5.** The use of any of claims 1 to 3, wherein the porphyrin of formula (I) is

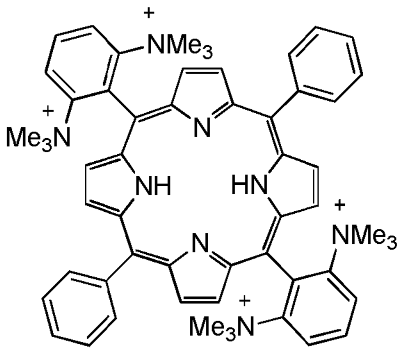 ,

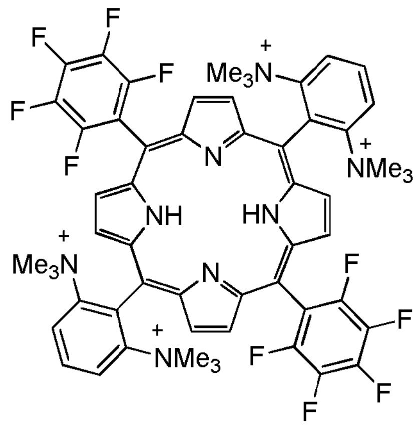 ,

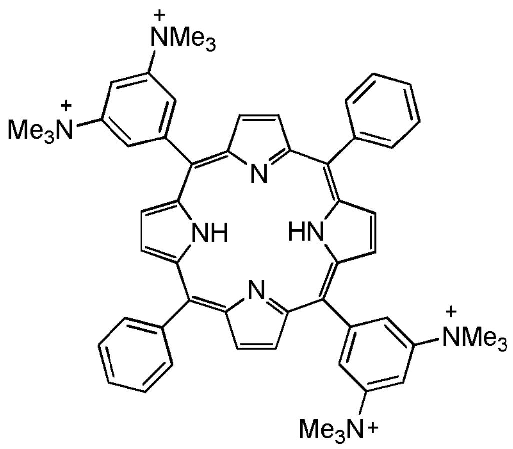 ,

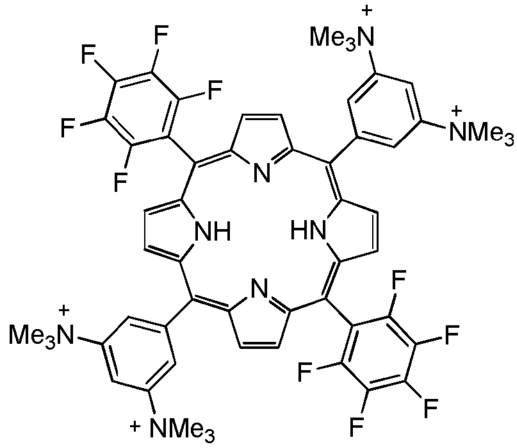 ,

or

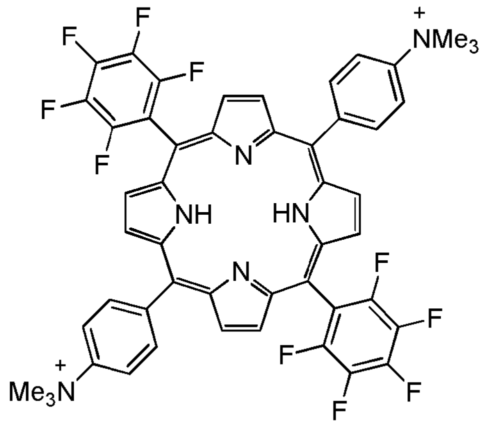

,

preferably as its chloride salt.

6. Method of reducing electrochemically $CO_2$ into CO using as catalyst a complex of a porphyrin of formula (I) as defined in any of claims 1 to 5 with iron in the oxidation state 0 to +III, and salts thereof, in electrochemical cell comprising at least two compartments, a cathode, an anode, a cathodic electrolyte solution comprising water as the solvent, the substrate $CO_2$, an anodic electrolyte and a power supply providing the energy necessary to trigger the electrochemical reactions involving the substrate, wherein $CO_2$ is reduced into CO by the porphyrin of formula (I) with iron in the state Fe(0).

7. The method of claim 6, wherein the solvent has a pH between 6.5 and 7.5.

8. The method of any of claims 6 and 7, wherein the faradaic yield of CO is between 90% and 100% and the solvent in the cathodic electrolyte is devoid of buffer.

9. The method of claim 6, wherein a mixture of CO and $H_2$ (syngas) is produced, and the pH of the aqueous solution and the potential applied to the cathode is adjusted so as to tune the $CO/H_2$ molar ratio of the produced gas.

10. The method according to any of claims 6 to 9, wherein the catalyst is in a concentration, in the electrolyte solution, of between 0.0001 and 0.01 M, preferably 0.001 M.

11. The method according to any of claims 6 to 10, wherein the potential applied to the cathode is between -1.5 V and -0.7 V versus NHE.

12. The use of the complex according to any of claims 1 to 5, wherein the complex is comprised in a two-compartment electrochemical cell comprising at least:

- an electrolyte solution comprising water as the solvent, a supporting electrolyte such as a salt, and the substrate $CO_2$,
- a power supply providing the energy necessary to trigger the electrochemical reactions involving the substrate, and
- an anode and a cathode.

13. The use of claim 12, wherein at least one electrode comprises a composition comprising the catalyst and a binder, preferably selected from the group consisting of conductive polymers, ionomers and/or fluoropolymers, in particular a fluorinated polymer with sulfonic end groups such as a perfluorosulfonic acid.

14. The use of claim 12 or 13, further comprising at least one proton exchange membrane comprising or consisting of an ionomer or/and fluoropolymer, preferably a fluorinated polymer with sulfonic end groups such as a perfluorosulfonic acid.

15. The use of any of claims 12 to 14, wherein the cathode is a carbon electrode.

**Patentansprüche**

1. Verwendung eines Komplexes eines Porphyrins der folgenden Formel (I):

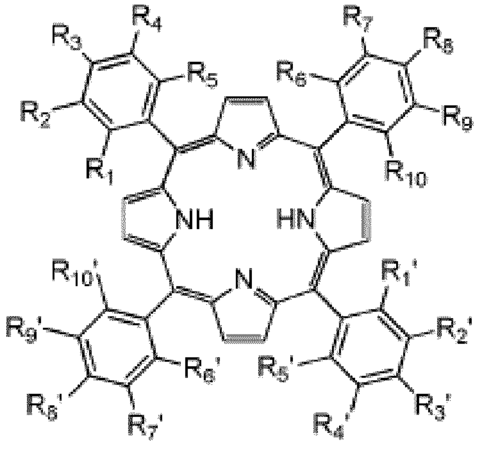

(I)

wobei $R_1$ bis $R_{10}$ und $R_1$' bis $R_{10}$' unabhängig aus der Gruppe bestehend aus H, F und $N^+(C_1\text{-}C_4\text{-Alkyl})_3$ ausgewählt sind,
und wobei:

mindestens 2 und höchstens 6 Gruppen aus $R_1$ bis $R_{10}$ und $R_1$' bis $R_{10}$' unabhängig $N^+(C_1\text{-}C_4\text{-Alkyl})_3$ sind, und mindestens eine von $R_6$, $R_{10}$, $R_6$' und $R_{10}$' aus der Gruppe bestehend aus H und F ausgewählt ist, und dann, wenn mindestens eine von $R_1$ bis $R_5$ $N^+(C_1\text{-}C_4\text{-Alkyl})_3$ darstellt, mindestens eine von $R_1$ bis $R_5$ H ist, und dann, wenn mindestens eine von $R_1$' bis $R_5$' $N^+(C_1\text{-}C_4\text{-Alkyl})_3$ darstellt, mindestens eine von $R_1$' bis $R_5$' H ist, und dann, wenn mindestens eine von $R_6$ bis $R_{10}$ $N^+(C_1\text{-}C_4\text{-Alkyl})_3$ darstellt, mindestens eine von $R_6$ bis $R_{10}$ H ist, und dann, wenn mindestens eine von $R_6$' bis $R_{10}$' $N^+(C_1\text{-}C_4\text{-Alkyl})_3$ darstellt, mindestens eine von $R_6$' bis $R_{10}$' H ist,
mit Eisen im Oxidationszustand 0 bis +III
und von Salzen davon
als Katalysator für die elektrochemische Reduktion von $CO_2$ zu CO in Wasser,
wobei $CO_2$ durch das Porphyrin von Formel (I) mit Eisen im Zustand Fe(0) zu CO reduziert wird.

2. Verwendung nach Anspruch 1, wobei in Formel (I) $R_3$ und $R_3$' unabhängig $N^+(C_1\text{-}C_4\text{-Alkyl})_3$ darstellen.

3. Verwendung nach Anspruch 2, wobei in Formel (I) $R_8$ und $R_8$' unabhängig $N^+(C_1\text{-}C_4\text{-Alkyl})_3$ darstellen.

4. Verwendung nach einem der Ansprüche 1 bis 3, wobei das Porphyrin der Formel (I)

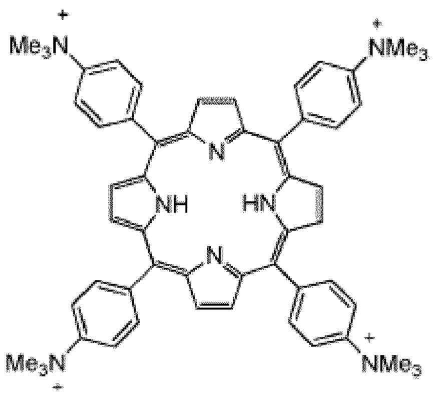

ist.

5. Verwendung nach einem der Ansprüche 1 bis 3, wobei das Porphyrin der Formel (I)

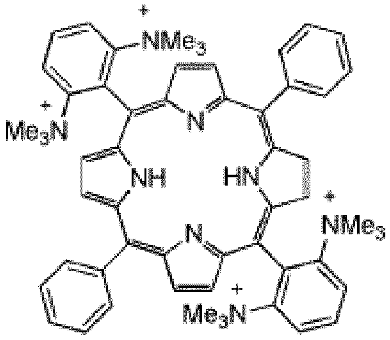

,

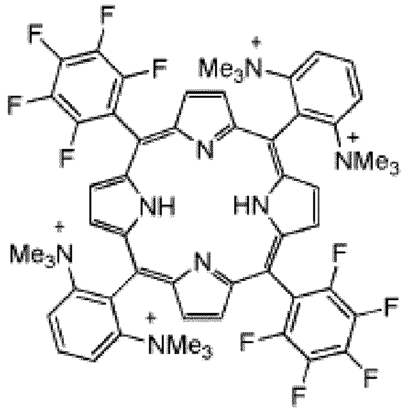

,

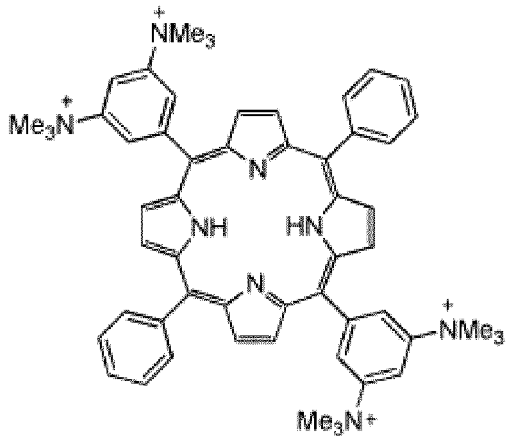

,

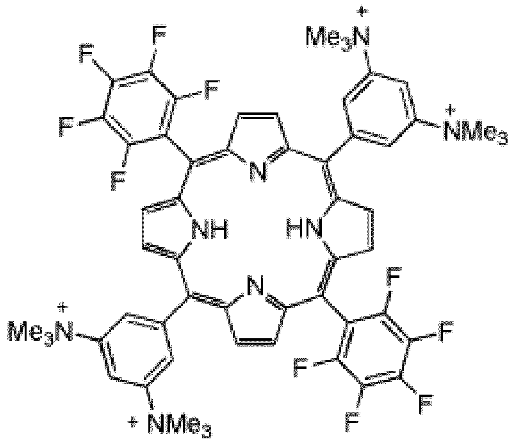

,

oder

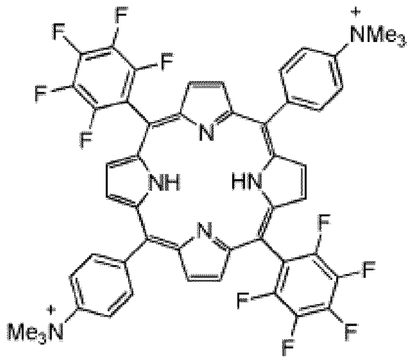

,

vorzugsweise als sein Chloridsalz ist.

**6.** Verfahren zum elektrochemischen Reduzieren von $CO_2$ zu CO unter Verwendung eines Komplexes eines Porphyrins der Formel (I) nach einem der Ansprüche 1 bis 5 mit Eisen im Oxidationszustand 0 bis +III und Salzen davon als Katalysator in einer elektrochemischen Zelle, die mindestens zwei Kammern, eine Kathode, eine Anode, eine kathodische Elektrolytlösung, die Wasser als Lösungsmittel umfasst, das Substrat $CO_2$, einen anodischen Elektrolyten und eine Leistungsversorgung umfasst, welche die Energie bereitstellt, die zum Auslösen der elektrochemischen Reaktionen unter Einbeziehung des Substrats notwendig ist, wobei $CO_2$ durch das Porphyrin der Formel (I) mit Eisen im Zustand Fe(0) zu CO reduziert wird.

**7.** Verfahren nach Anspruch 6, wobei das Lösungsmittel einen pH von 6,5 bis 7,5 aufweist.

8. Verfahren nach einem der Ansprüche 6 und 7, wobei die faradaysche Ausbeute von CO 90 % bis 100 % beträgt, und das Lösungsmittel im kathodischen Elektrolyten frei von Puffer ist.

9. Verfahren nach Anspruch 6, wobei ein Gemisch aus CO und $H_2$ (Synthesegas) erzeugt wird, und der pH der wässrigen Lösung und das an die Kathode angelegte Potenzial angepasst werden, um das $CO/H_2$-Molverhältnis des erzeugten Gases abzustimmen.

10. Verfahren nach einem der Ansprüche 6 bis 9, wobei der Katalysator in der Elektrolytlösung in einer Konzentration von 0,0001 bis 0,01 M, vorzugsweise 0,001 M ist.

11. Verfahren nach einem der Ansprüche 6 bis 10, wobei das an die Kathode angelegte Potenzial -1,5 V bis -0,7 V versus NHE beträgt.

12. Verwendung des Komplexes nach einem der Ansprüche 1 bis 5, wobei der Komplex in einer elektrochemischen Zweikammerzelle umfasst ist, die mindestens Folgendes umfasst:

- eine Elektrolytlösung, umfassend Wasser als Lösungsmittel, einen Trägerelektrolyten, wie beispielsweise ein Salz, und das Substrat $CO_2$,
- eine Leistungsversorgung, welche die Energie bereitstellt, die zum Auslösen der elektrochemischen Reaktionen unter Einbeziehung des Substrats notwendig ist, und
- eine Anode und eine Kathode.

13. Verwendung nach Anspruch 12, wobei mindestens eine Elektrode eine Zusammensetzung umfasst, die den Katalysator und ein Bindemittel umfasst, das vorzugsweise aus leitenden Polymeren, Ionomeren und/oder Fluorpolymeren, insbesondere einem fluorierten Polymer mit Sulfon-Endgruppen, beispielsweise einer Perfluorsulfonsäure, ausgewählt ist.

14. Verwendung nach Anspruch 12 oder 13, umfassend mindestens eine Protonenaustauschmembran, die ein Ionomer und/oder ein Fluorpolymer, insbesondere ein fluoriertes Polymer mit Sulfon-Endgruppen, beispielsweise einer Perfluorsulfonsäure, umfasst oder aus solchen besteht.

15. Verwendung nach einem der Ansprüche 12 bis 14, wobei die Kathode eine Kohlenstoffelektrode ist.

## Revendications

1. Utilisation d'un complexe de porphyrine de formule (I) ci-dessous :

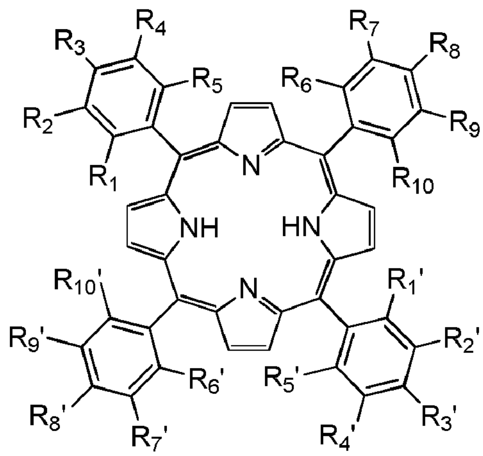

(I)

dans laquelle $R_1$ à $R_{10}$ et $R_1'$ à $R_{10}'$ sont indépendamment choisis dans le groupe constitué par H, F et $N^+$(alkyle en $C_1$ à $C_4$)$_3$, et dans laquelle :

au moins 2 et au plus 6 groupes parmi $R_1$ à $R_{10}$ et $R_1'$ à $R_{10}'$ sont indépendamment un $N^+$(alkyle en $C_1$ à $C_4$)$_3$, et

au moins l'un de $R_6$, $R_{10}$, $R_6$' et $R_{10}$' est choisi dans le groupe constitué par H et F, et
si au moins l'un de $R_1$ à $R_5$ représente un $N^+$(alkyle en $C_1$ à $C_4$)$_3$, alors au moins l'un des autres $R_1$ à $R_5$ est H, et
si au moins l'un de $R_1$' à $R_5$' représente un $N^+$(alkyle en $C_1$ à $C_4$)$_3$, alors au moins l'un des autres $R_1$' à $R_5$' est H, et
si au moins l'un de $R_6$ à $R_{10}$ représente un $N^+$(alkyle en $C_1$ à $C_4$)$_3$, alors au moins l'un des autres $R_6$ à $R_{10}$ est H, et
si au moins l'un de $R_6$' à $R_{10}$' représente un $N^+$(alkyle en $C_1$ à $C_4$)$_3$, alors au moins l'un des autres $R_6$' à $R_{10}$' est H,
le fer étant dans l'état d'oxydation 0 à +III,
et de ses sels,
en tant que catalyseur pour la réduction électrochimique de $CO_2$ en CO dans de l'eau,
dans laquelle le $CO_2$ est réduit en CO par la porphyrine de formule (I) avec du fer dans l'état Fe(0).

2. Utilisation selon la revendication 1, dans laquelle, dans la formule (I), $R_3$ et $R_3$' représentent indépendamment un $N^+$(alkyle en $C_1$ à $C_4$)$_3$.

3. Utilisation selon la revendication 2, dans laquelle, dans la formule (I), $R_8$ et $R_8$' représentent indépendamment un $N^+$(alkyle en $C_1$ à $C_4$)$_3$.

4. Utilisation selon l'une quelconque des revendications 1 à 3, dans laquelle la porphyrine de formule (I) est

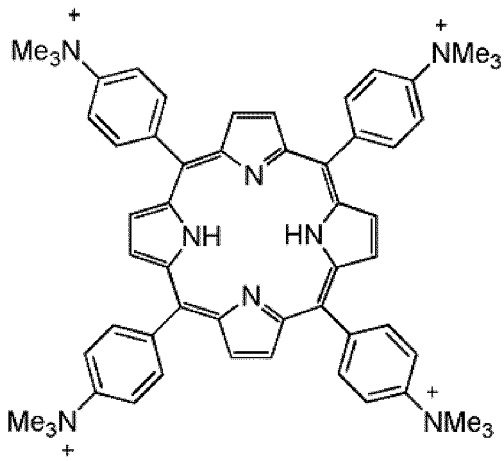

5. Utilisation selon l'une quelconque des revendications 1 à 3, dans laquelle la porphyrine de formule (I) est

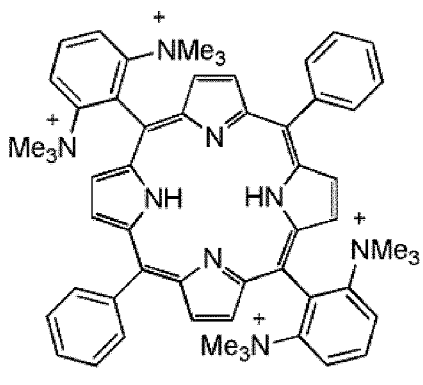
,
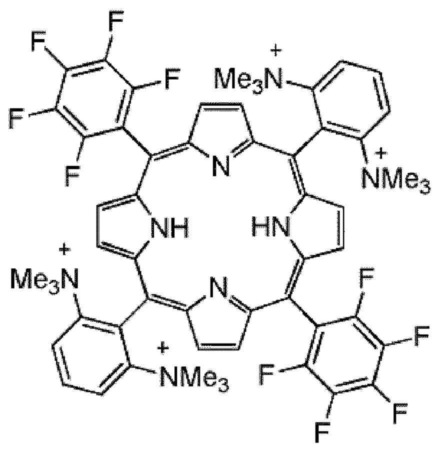
,

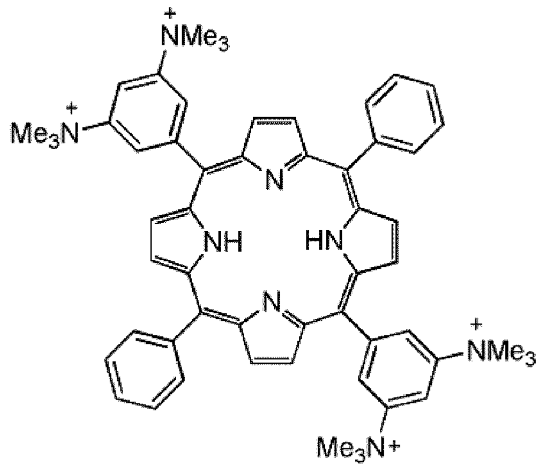

,

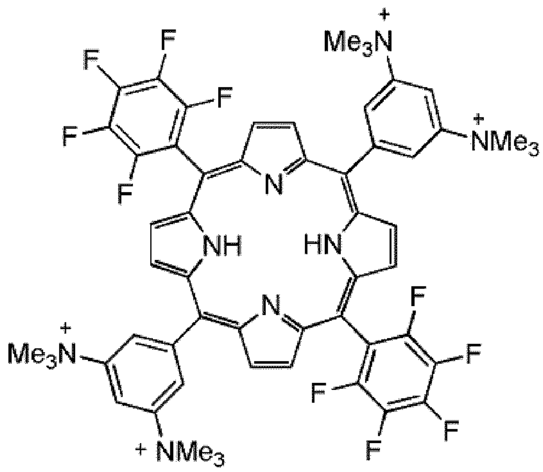

,

ou

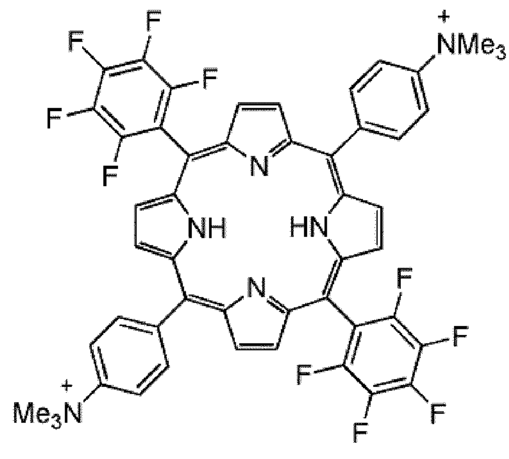

,

de préférence sous la forme de son sel chlorure.

6. Procédé pour réduire électrochimiquement le $CO_2$ en CO utilisant, en tant que catalyseur, un complexe d'une porphyrine de formule (I) telle que définie dans l'une quelconque des revendications 1 à 5 avec du fer dans l'état d'oxydation 0 à +III, et de ses sels, dans une cellule électrochimique comprenant au moins deux compartiments, une cathode, une anode, une solution d'électrolyte cathodique comprenant de l'eau en tant que solvant, le substrat

$CO_2$, un électrolyte anodique et une source d'alimentation apportant l'énergie nécessaire pour déclencher les réactions électrochimiques impliquant le substrat, dans lequel le $CO_2$ est réduit en CO par la porphyrine de formule (I) avec du fer dans l'état Fe(0).

**7.** Procédé selon la revendication 6, dans lequel le solvant a un pH compris entre 6,5 et 7,5.

**8.** Procédé selon l'une quelconque des revendications 6 et 7, dans lequel le rendement faradique du CO est compris entre 90 % et 100 % et le solvant dans l'électrolyte cathodique est exempt de tampon.

**9.** Procédé selon la revendication 6, dans lequel un mélange de CO et de $H_2$ (gaz de synthèse) est produit, et le pH de la solution aqueuse et le potentiel appliqué à la cathode sont ajustés de sorte que le rapport molaire $CO/H_2$ du gaz produit soit accordé.

**10.** Procédé selon l'une quelconque des revendications 6 à 9, dans lequel le catalyseur est à une concentration, dans la solution d'électrolyte, comprise entre 0,0001 et 0,01 M, de préférence 0,001 M.

**11.** Procédé selon l'une quelconque des revendications 6 à 10, dans lequel le potentiel appliqué à la cathode est compris entre -1,5 V et -0,7 V contre du NHE.

**12.** Utilisation du complexe de l'une quelconque des revendications 1 à 5, dans laquelle le complexe est compris dans une cellule électrochimique à deux compartiments comprenant au moins :

- une solution d'électrolyte comprenant de l'eau en tant que solvant, un électrolyte de support tel qu'un sel, et le substrat $CO_2$,
- une source d'alimentation apportant l'énergie nécessaire pour déclencher les réactions électrochimiques impliquant le substrat, et
- une anode et une cathode.

**13.** Utilisation selon la revendication 12, dans laquelle au moins une électrode comprend une composition comprenant le catalyseur et un liant, de préférence choisi dans le groupe constitué par les polymères, ionomères et/ou polymères fluorés conducteurs, en particulier un polymère fluoré avec des groupes terminaux sulfoniques, tel que l'acide perfluorosulfonique.

**14.** Utilisation selon la revendication 12 ou 13, comprenant en outre au moins une membrane échangeuse de protons comprenant ou consistant en un ionomère et/ou polymère fluoré, de préférence un polymère fluoré avec des groupes terminaux sulfoniques, tel que l'acide perfluorosulfonique.

**15.** Utilisation selon l'une quelconque des revendications 12 à 14, dans laquelle la cathode est une électrode en carbone.

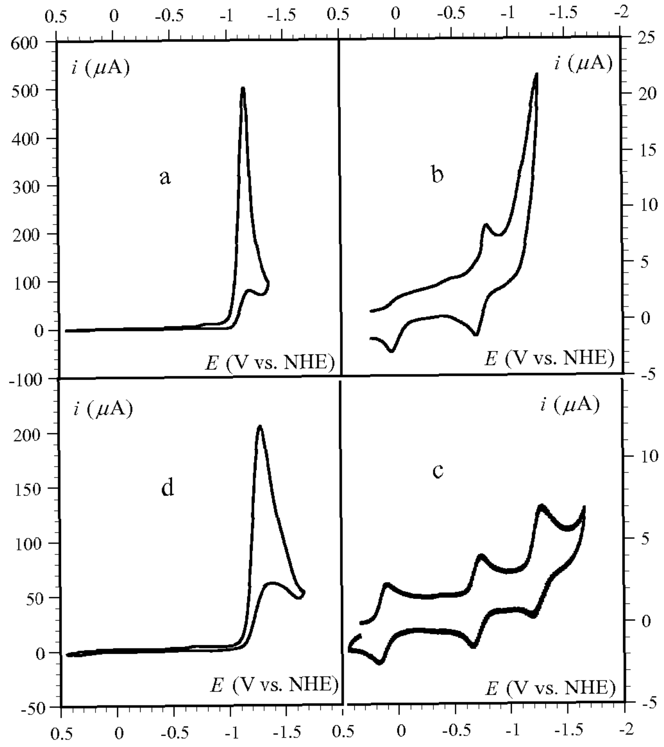


Figure 1

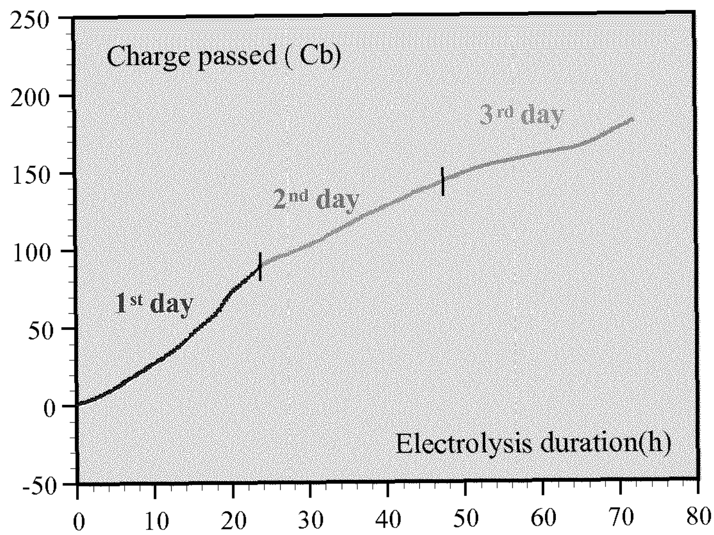


Figure 2

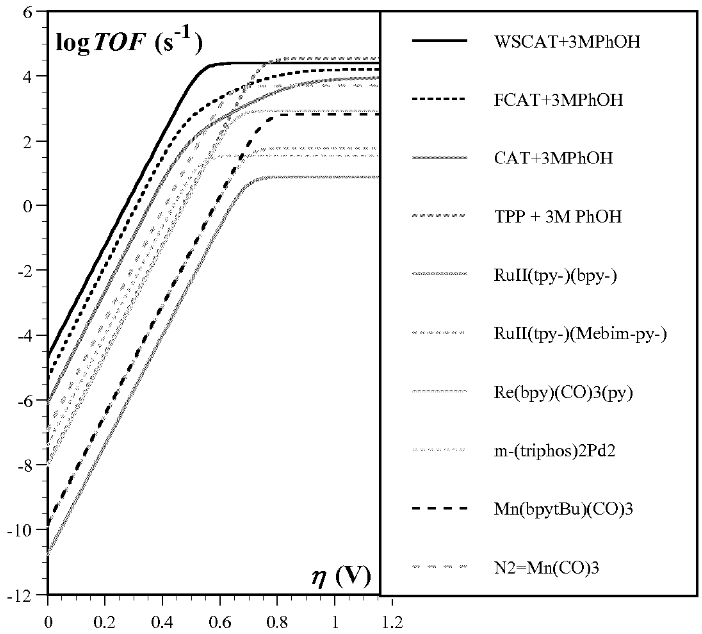


Figure 3

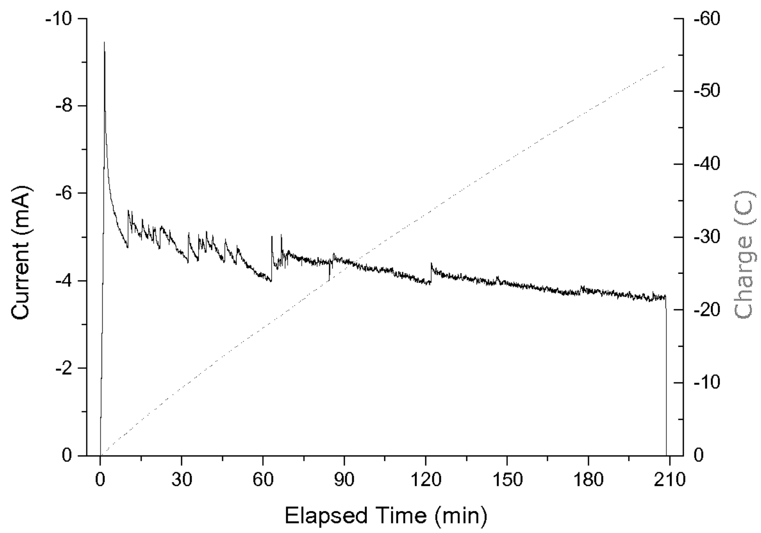


Figure 4

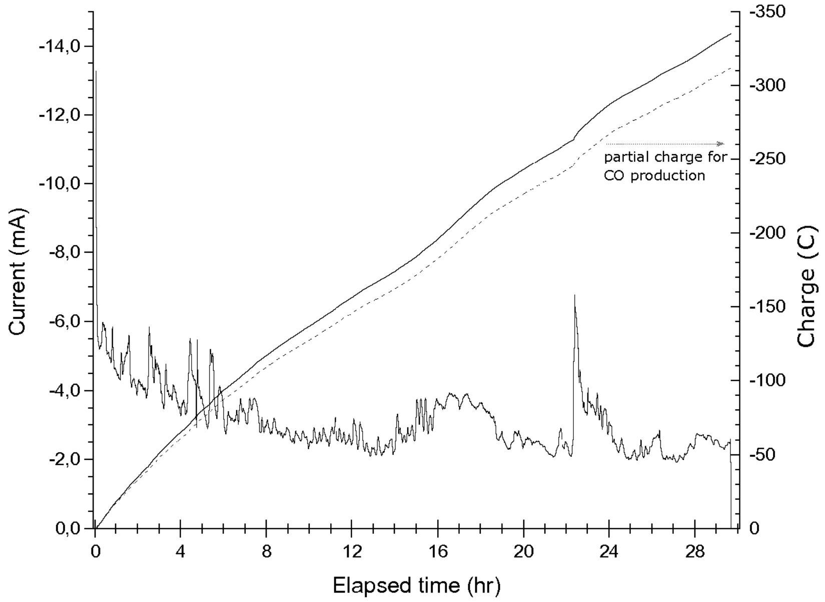
Current (mA)
-14,0
-12,0
-10,0
-8,0
-6,0
-4,0
-2,0
0,0
Charge (C)
-350
-300
-250
-200
-150
-100
-50
0
partial charge for CO production
0
4
8
12
16
20
24
28
Elapsed time (hr)

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Chem. Soc. Rev.,* 2013, vol. 42, 2423
- *Science,* 2012, vol. 338, 90
- *Proc. Natl. Acad. Sci. U.S.A.,* 2014, vol. 111, 14990-14994
- **SCIBIOH et al.** Physical Science. *Proceedings of the indian national science academy,* 2004, vol. 70, 407-462
- **SONOYAMA et al.** *Electrochemistry Communications,* 1999, vol. 1, 213-216
- **JINLI QIAO et al.** *Chemical society reviews,* 2013, vol. 43, 631
- **CAO et al.** *Acta Chimica Sinica,* 1986, vol. 44 (220), 133-139
- **COSTENTIN et al.** *Proc. Natl. Acad. Sci. U.S.A.,* 2014, vol. 111, 14990-14994
- **COSTENTIN et al.** *ChemElectroChem,* 2014, vol. 1, 1226-1236
- **COSTENTIN et al.** *Science,* 2012, vol. 338, 90
- *J. Am. Chem. Soc.,* 2012, vol. 134, 11235-11242, 19949-19950
- *J. Am. Chem. Soc.,* 2013, vol. 135, 9023-9031